# EUROPÄISCHE PATENTSCHRIFT

(11) **EP 2 216 372 B1**
(45) Veröffentlichungstag und Bekanntmachung des Hinweises auf die Patenterteilung: **04.06.2014**
(21) Anmeldenummer: 10151812.4
(22) Anmeldetag: 27.01.2010
(51) Int. Cl.: C09D 5/14, C09J 11/00

(54) **Verbindungen als Geruchsverhinderer**
Compounds for preventing Ghost odour
Connexions destinée à éviter une odeur fantôme

(30) Priorität: 29.01.2009 EP 09151677
(43) Veröffentlichungstag der Anmeldung: 11.08.2010
(73) Patentinhaber: THOR GmbH, 67346 Speyer (DE)
(72) Erfinder: Baum, Rüdiger, 68753 Waghäusel (DE); Schmidt, Hans-Jürgen (ER), 67346 Speyer (DE); Wunder, Thomas Dr., 67435 Neustadt (DE); Savides, Christos Dr. (ER), Fairfield, Connecticut 06825 (US)

(56) Entgegenhaltungen:
- EP-A1- 1 961 792
- WO-A1-2005/123851
- WO-A1-2008/148855
- WO-A2-2006/042128

## Beschreibung

Die Erfindung betrifft die Verwendung eines oder mehrerer Inhibitor(s)(en) ausgewählt aus der Gruppe bestehend aus Iodoform, Chlorothalonil, Hydroxylamin-o-sulfonsäure, Maleimid, 2,6-Bis-Brommethyl-pyridin-1-oxid, 2,6-Bis-Dibrommethyl-pyridin-1-oxid, 2,6-Bis-Chlormethyl-pyridin, Acetylaceton, Diiodmethan, 2-Dibromnitromethyl-3-methyl-pyridin, 2-Iod-1-propenyl-phenylsulfon, 3-Iodmethyl-pyridinhydroiodid, 3-Brommethyl-pyridinhydrobromid, Brommethyl-p-phenyl-sulfon, 2-Brommethyl-6-methyl-pyridin, Diiodmethyl-p-tolyl-sulfon, N-(2-Iod-1-Iodmethyl-ethyl)benzylsulfonamid, N-Trichlormethylthiophthalimid, Dichlofluanid, Allyl-p-tolyl-sulfon, Natriumiodid, Kaliumiodid, Bromessigsäure, Iodessigsäure, Alkylhalogenide, Methionin, Benzylhalogenide, Dialkylether, Diarylether, Acrylalkenylether Sulfonsäurealkylester, Butylhydroxytoluol. (BHT), Butylhydroxyanisol (BHA) natürlichen und modifizierten Harzen, Gummiharzen, Holzharzen, Kollophoniumharzen, Ölharzen, destillierten Harzen, hydrierten Harzen, dimerisierten und polymerisierten Harzen, Leinöl, 2,5-Di-tert-butylhydrochinon, 3,5-Di-tert-butylhydrochinon, Propylgallat, Ascorbinsäure, Isoascorbinsäure, Kaliumiodat, Natriumiodat und Kaliumbromat, zur Verhinderung von Ghost Odor in Beschichtungsmitteln, ausgewählt aus der Gruppe der Putze, Klebstoffe, Polymerdispersionen, Latex- und Dispersionsfarben die Methyl-4-isothiazolin-3-on und/oder Octyl-4-isothiazolin-3-on enthalten.

Bei der Beschichtung von Flächen mit Beschichtungsmitteln wie Dispersionsfarben treten häufig unangenehme Gerüche auf. Dabei werden diese vor allem im Innenbereich aufgrund unzureichender Ventilation als besonders unangenehm empfunden.

Häufig sind solche Gerüche dabei auf leicht flüchtige Inhaltsstoffe des Beschichtungsmittels (VOC = volatile organic compounds) zurückzuführen, die einen intensiven Eigengeruch aufweisen. Die VOCs sind zum Beispiel Lösemittel, Amine oder Restmonomere aus dem Bindemittel. Störende Gerüche, die auf VOC-Bestandteile zurückzuführen sind, sind in der Regel zeitlich begrenzt und treten nicht mehr auf, sobald die flüchtigen Inhaltsstoffe aus der Beschichtung komplett verdunstet sind.

Das Auftreten von störenden Gerüchen kann ferner durch mikrobiellen Befall (MVOC = microbial VOC) der Beschichtung hervorgerufen werden. Dabei kann der mikrobielle Befall durch das Beschichtungsmittel selbst, durch den Beschichtungsuntergrund oder durch eine Wechselwirkung des Beschichtungsmittels mit dem Beschichtungsuntergrund hervorgerufen werden. Darüber hinaus ist ein mikrobieller Befall durch äußere Faktoren möglich, wie zum Beispiel Schimmelbildung auf feuchten Wänden infolge hoher Luftfeuchtigkeit, unzureichender Ventilation oder aufgrund von Baumängeln und dergleichen.

Das Auftreten dieser Art von störenden Gerüchen ist bekannt und im Stand der Technik sind vielfältige Lösungen zur Verhinderung oder Verminderung solch störender Gerüche offenbart. So sind viele VOC-freie Beschichtungsmittel bekannt, durch deren Einsatz VOC-bedingte störende Gerüche vermieden werden können.

Das Auftreten von störenden Gerüchen, die auf MVOC zurückzuführen sind, lässt sich durch eine wirksame Konservierung des Beschichtungsmittels selbst sowie eine entsprechende Behandlung des Beschichtungsuntergrunds und das Eliminieren äußerer Faktoren verhindern oder vermindern.

Ein bislang weitgehend unerforschtes und bisher ungelöstes Problem stellt der so genannte "Ghost Odor" dar. Dabei tritt ein unangenehmer Geruch in Räumen mit bereits getrockneten, verfilmten und teilweise bereits älteren Beschichtungen auf. Der Ghost Odor kann dabei Tage, Wochen oder Monate nach dem Aufbringen der Beschichtung auftreten und wird als katzenurinartig, schweißig, zwiebelartig, gummiartig, fruchtig wahrgenommen und beschrieben. Es ist weiter bekannt, dass dieser Ghost Odor bei warmer Witterung besonders intensiv wahrnehmbar ist, bei höherer Luftfeuchte, vielfach auch nach dem Lüften eines Raumes, bei intensivem Sonnenlicht, und insbesondere unter der Einwirkung von Ozon.

Untersuchungen zeigen, dass schwefelhaltige Verbindungen maßgeblich an der Geruchsbildung beteiligt sind. Schwefelverbindungen in Beschichtungsmitteln können aus zahlreichen unterschiedlichen Quellen stammen. Diese können in den Produkten selbst oder in den zur ihrer Herstellung verwendeten Rohstoffen rezepturbedingt oder als herstellbedingte, lagerungs- oder transportbedingte Verunreinigungen enthalten sein. Dabei kann es sich um Schwefelverbindungen sowohl synthetischen Ursprungs als auch um Schwefelverbindungen biogenen Ursprungs handeln. Verbindungen, welche das Auftreten von "Ghost Odor" in Beschichtungen bzw. Beschichtungsmitteln hervorrufen können sind 2-Methyl-4-isothiazolin-3-on und Octyl-4-isothiazolin-3-on.

Mit Hilfe des in den Beispielen beschriebenen Verfahrens ist es möglich, den Ghost Odor standardisiert nachzuweisen. Personen die dem Ghost Odor ausgesetzt waren, sind bei normalem Geruchsempfinden in der Lage diesen Geruch zweifelsfrei wieder zu erkennen.

Das Vermeiden von Schwefelverbindungen in Beschichtungsstoffen zur Verhinderung des Ghost Odor ist oft nur schwer möglich, da es sich bereits um äußerst geringe Mengen handeln kann, die den Geruch verursachen.

Die internationale Patentanmeldung WO 2006/1042128 A2 offenbart ein Verfahren zur Holzbehandlung, bei dem eine wässrige Dispersion hergestellt wird, die dann in das Holz injiziert wird. In der Beschreibung werden verschiedene Formulierungen von wirkstoffhaltigen Dispersionen offenbart. Auf den Seiten 41 bis 47 werden dabei auch zahlreiche biozide Komponenten beschrieben, die zur Holzbehandlung geeignet sein sollen.

In dem Dokument WO 20051123851 A1, welches sich mit Anstrichfarben befasst, werden zahlreiche Kombinationen unterschiedlicher biozider Wirkstoffe offenbart. Auf der Seite 12 dieser Druckschrift wird auf den Einsatz von OIT zur Verbesserung der fäulnisverhindernden Eigenschaften der Farbe hingewiesen.

In der WO 2008/148855 A1 werden Biozidzusammensetzungen beschrieben, die Glutaraldehyd und beispielsweise OIT enthalten.

In der Patentanmeldung EP 1 961 792 A1 wird ein Verfahren zur Oberflächenbehandlung beschrieben, bei dem eine Latexfarbe eingesetzt wird, die mehrere Stabilisierungskomponenten enthält. Als eine Komponente kann auch MIT oder OIT eingesetzt werden.

Aufgabe der Erfindung ist es, Verbindungen zur zumindest weitgehenden Verhinderung oder Verminderung des Ghost Odor in 2-Methyl-4-isothiazolin-3-on und/oder Octyl-4-isothiazolin-3-on enthaltenden Biozidzusammensetzungen, Gebinden und Beschichtungen bereitzustellen. Weiterhin ist es Aufgabe der Erfindung Biozidzusammensetzungen zur Verfügung zu stellen, die 2-Methyl-4-isothiazolin-3-on und/oder Octyl-4-isothiazolin-3-on enthalten und ein vermindertes Auftreten von Ghost Odor aufweisen.

Gelöst wird diese Aufgabe durch ein Beschichtungsmittel, ausgewählt aus der Gruppe der Putze, Klebstoffe, Polymerdispersionen, Latex- und Dispersionsfarben enthaltend Methyl-4-isothiazolin-3-on und/oder Octyl.-4-isothiazolin-3-on, sowie einen oder mehrere Inhibitor(en) ausgewählt aus der Gruppen bestehend aus Iodoform, Chlorothalonil, Hydroxylamin-o-sulfonsäure, Maleimid, 2,6-Bis-Brommethyl-pyridin-1-oxid, 2,6-Bis-Dibrommethyl-pyridin-1-oxid, 2,6-Bis-Chlormethyl-pyridin, Acetylaceton, Diiodmethan, 2-Dibromnitromethyl-3-methyl-pyridin, -2-Iod-1-propenyl-phenylsulfon, 3-Iodmethyl-pyridinhydroiodid, 3-Brommethyl-pyridinhydrobromid, Brommethyl-p-phenyl-sulfon, 2-Brommethyl-6-methyl-pyridin, Diiodmethyl-p-tolyl-sulfon, N-(2-Iod-1-Iodmethyl-ethyl)benzylsulfonamid, N-Tichlormethylthiophthalimid, Dichlofluanid, Allyl-p-tolyl-sulfon, Natriumiodid, Kaliumiodid, Bromessigsäure, Iodessigsäure, Alkylhalogenide, Methionin, Benzylhalogenide, Dialkylether, Diarylether, Acrylalkenylether, Sulfonsäurealkylester, Butylhydroxytoluol (BHT), natürlichen und modifizierten Harzen, Gummiharzen, Holzharzen, Kollophoniumharzen, Ölharzen, destillierten Harzen, hydrierten Harzen, dimerisierten und polymerisierten Harzen, Leinöl, Butylhydroxyanisol (BHA), 2,5-Di-tert-butylhydrochinon, 3,5-Di-tert-butylhydrochinon, Propylgallat, Ascorbinsäure, Isoascorbinsäure, Kaliumiodat, Natriumiodat und Kaliumbromat.

Diese Inhibitoren sind geeignet das Auftreten von Ghost Odor in Beschichtungsmitteln, Gebinden und Beschichtungen, welche MIT und/oder OIT enthalten, zumindest weitgehend zu vermindern. Die Beschichtungsmittel können dabei ausgewählt sein aus technischen Produkten und Materialien wie Farben, Lacken, Lasuren und Putzen, Emulsionen, Latices, Polymerdispersionen. Ferner eignen sich die Verbindungen zur zumindest weitgehenden Verhinderung oder zumindest weitgehenden Verminderung von Ghost Odor in Kreideaufschlämmungen, mineralischen Slurrys, Klebstoffen, Pigmentpasten und Pigmentdispersionen, Verdickern, Flüssigkeiten und Rohstoffen bei der Papierverarbeitung. Vorzugsweise eignen sich die erfindungsgemäßen Verbindungen zur Verhinderung von Ghost Odor in Beschichtungen, die durch Aufbringen der vorstehend genannten Beschichtungsmittel auf Flächen erhältlich sind (Gegebenenfalls ist ein Trocknungsschritt erforderlich). Weiterhin eignen sich die Verbindungen zur vorbeugenden Verhinderung von Ghost Odor, in den entsprechenden Gebinden, die MIT und/oder OIT als Konservierungsmittel enthalten. Unter "Gebinde" sind dabei die vorstehend aufgezählten Beschichtungsmittel, die in einem Gefäß wie einem Tank bzw. Eimer gelagert sind, zu verstehen. Sind nachfolgend Konzentrationsangaben genannt, die sich auf ein Gebinde beziehen, so gelten diese Angaben ebenfalls für die entsprechenden Beschichtungsmittel.

Weiterhin geeignet ist die Verwendung der erfindungsgemäßen Inhibitoren in Wandfarben, insbesondere in wasserbasierenden Wandfarben für die Beschichtung von Flächen im Innenbereich.

Gemäß einer weiteren bevorzugten Ausführungsform der Erfindung werden die Inhibitoren zur Verhinderung von Ghost Odor in Gebinden bzw. Beschichtungen und Beschichtungen eingesetzt, die mit einem MIT/BIT-Gemisch, einem MIT/OIT-Gemisch, einem MIT/Bronopol-Gemisch, MIT/Pyrithion-Gemisch, insbesondere MIT/Zinkpyrithion und MIT/Natriumpyrithion, einem MIT/DCOIT-Gemisch, MIT/CMIT-Gemisch, einem MIT/CMIT/BIT-Gemisch, einem MIT/Dithiobisbenzmethylamid-Gemisch, einem MIT/Quat-Gemsich, insbesondere MIT/Benzalkoniumchlorid und MIT/Dimethyldidecyl-ammoniumchlorid, einem MIT/Biguanidin-Gemisch, insbesondere MIT/Polyhexamethylenbiguanid, einem MIT/DBNPA-Gemisch, einem MIT/Formaldehydabspalter-Gemisch, insbesondere MIT/Tetramethylolacetylendiharnstoff, einem MIT/N-Alkyl-BIT-Gemisch, insbesondere MIT/N-Methyl-BIT und MIT/N-Butyl-BIT, einem MIT/IPBC-Gemisch, einem MIT/o-Phenylphenol-Gemisch, einem OIT/DCOIT-Gemisch, einem MIT/Ag-Gemisch, einem OIT/Ag-Gemisch, OIT/Formaldehydabspalter-Gemisch, insbesondere OIT/Tetramethylolaectylendiharnstoff, einem OIT/Glutaraldehyd-Gemisch, einem OIT/IPBC-Gemisch, einem OIT/Pyrithion-Gemisch, insbesondere OIT/Zinkpyrithion und OIT/Natriumpyrithion, einem OIT/Carbendazim-Gemisch, OIT/BIT-Gemisch, OIT/MIT/CMIT-Gemisch, mit einem OIT/Dithiobisbenzmethylamid-Gemisch, mit einem OIT/N-Alkyl-BIT-Gemisch, insbesondere OIT/N-Methyl-BIT und OIT/N-Butyl-BIT, einem OIT/Quat-Gemisch, insbesondere OIT/Benzalkoniumchlorid und OIT/Dimethyldidecylammoniumchlorid, konserviert sind.

Die Anwendungskonzentrationen der vorstehend genannten Biozidgemische liegen dabei üblicherweise im Bereich von 1 bis 2.000 ppm, bevorzugt im Bereich von 1 bis 1000 ppm und insbesondere bevorzugt im Bereich von 1 bis 500 ppm, bezogen auf deren Konzentration im Gebinde. Die Konzentrationen der Inhibitoren liegen bei sämtlichen Anwendungen üblicherweise im Bereich von 1 bis 1.000 ppm, bevorzugt im Bereich von 1 bis 100 ppm und insbesondere bevorzugt im Bereich von 1 bis 10 ppm, bezogen auf deren Konzentration im Gebinde.

Gemäß einer Ausführungsform der Erfindung handelt es sich bei den Inhibitoren um Biozide. Gemäß einer alternativen Ausführungsform der Erfindung handelt es sich bei den Inhibitoren nicht um Biozide, das heißt, dass diese entweder keinerlei biozide Wirkung besitzen oder in der Anwendung in einer Konzentration vorliegen, in der sie keine biozide Wirkung entfalten. Sie dienen in diesem Fall nur dazu, das Auftreten des Ghost Odor zu vermindern und leisten keinen nachweisbaren Beitrag zur Konservierung.

Allgemein liegt das Verhältnis von Konservierungsmittel bzw. Biozid zu Inhibitor im Bereich von 1000:1 bis 1:100, bevorzugte Verhältnisse liegen im Bereich von 100:1 bis 1:10, insbesondere bevorzugt sind Verhältnisse im Bereich von 10:1 1 bis 1:1.

Geeignete Verbindungen aus der Gruppe der Elektrophilen (A) sind C₁ bis C₆ Mono- und Dialdehyde, ausgenommen sind die Verbindungen Formaldehyd, Glyoxal und Glutaraldehyd. Weiterhin geeignete Verbindungen sind Acetaldehyd, ungesättigte C₁ bis C₆ Mono- und Dialdehyde wie Succinaldehyd, Acrolein, α-Bromcinnamaldehyd (BCA). Weitere geeignete Verbindungen aus der Gruppe der Elektrophilen (A) sind Formaldehydabspalter, die auch Formaldehyd-Depotstoffe genannt werden. Formaldehyd-Depotstoffe sind Verbindungen, die in einer chemischen Reaktion Formaldehyd abgeben. Derartige Verbindungen sind beispielsweise in dem Standard-Nachschlagewerk auf dem Mikrobizid-Gebiet Wilfried Paulus: Directory of Microbicides for the Protection of Materials and Processes. Springer Netherland, Berlin 2006, ISBN 1-402-04861-0 in dem Kapitel "Formaldehyd Releasing Compounds" definiert und genannt. Wichtig bei den Formaldehyd-Depotstoffen ist dabei das Vorliegen bestimmter funktioneller Gruppen, beispielsweise einer Hydroxymethyl-Gruppe. Beispiele für Formaldehyd-Depotstoffe sind Verbindungen wie n-Butanolhemiformal, Benzalkoniumhemiformal, 2-Phenoxyethanolhemiformal, Ethylenglykolhemiformal, 3-Iodpropargyl-(4-chlorphenyl)-formal, Tetra(hydroxymethyl)phosphoniumsulfat (THPS), 2-Hydroxy-2-nitropropan-1,3-diol, Di(Hydroxymethyl)uron, Halbacetale, Dimethylolharnstoff, Tetrahydroxymethylacetylendiharnstoff, 1,6-Dihydroxyl-2,5-dioxahexan, Reaktionsprodukte von Aminen mit Formaldehyd, insbesondere Hexaminderivate wie z.B. Hexamin, N-(3-chlorallyl)-hexaminiumchlorid, 1,3-Oxazolidine, 1,3-Oxazine, 1,3,5-substituierte Hexahydrotriazine (HHT), Diaminomethan-Derivate wie Dimorpholinomethan, Reaktionsprodukte aus Amiden und Formaldehyd, wie N-Hydroxymethylamide wie N-methylolchloracetamid, 2,2,3-Trichlor-N-hydroxymethylpropionamid, N-Hydroxymethylharnstoffe, Diazolidinylharnstoffe, Imidazolidinylharnstoffe, Methyloldimethylhydantoine, Reaktionsprodukte aus Aminosäuren und Formaldehyd wie Natriumhydroxymethylglycinate und Taurolin.

Ferner als Elektrophile sind geeignet aktivierte Verbindungen wie Thiocyanate bzw. Isothiocyanate wie Methylenbisthiocyanat, Iodmethylthiocyanat, Allylisothiocyanat.

Ferner geeignet sind:
- Carbonsäureamide wie 2-Chloracetamid, 2-Bromacetamid, 2-Iodacetamid, N-(4-Brom-2-methylphenyl)-2-chloracetamid (BMPCA), 2,2-Dibrom-3-nitrilopropion-amid (DBNPA), 2,2-Dibrom-2-nitroacetamid, N-hydroxymethylchloracetamid
- C-Methylole wie z.B., 2-Brom-2-nitropropan-1-ol (BNP), 2-Brom-2-nitropropan-1-ol , 5-Brom-5-nitro-1,3-dioxan
- Reaktionsprodukte aus Amiden und Formaldehyd, z.B. N-Hydroxymethylamide wie N-methylol-chloracetamid oder 2,2,3-Trichlor-N-hydroxymethyl-propionamid
- α-Halogencarbonsäuren wie Chlor-, Brom- Iodessigsäure α-Halogencarbonsäureester wie Ethylbromacetat, Benzylbromacetat, 1-Brom-3-ethoxy-carbonyloxy-1,2-diiod-1-propen, 1,4-Bis(bromacetoxy)-2-buten (BBAB), 1,2-Bis(bromacetoxy)ethan, 2-Brom-4'-hydroxyacetophenon, 2,3-Dibrom-(2-hydroxy)ethylpropionat
- Halomethyl-Sulfonsäurederivate (Halogen = Cl, Br, I) wie Bis(trichlormethyl)sulfon, p-[(Diiodmethyl)sulfonyl]toluol, p-[(Iodmethyl)sulfonyl]toluol, p-[(Dibrommethyl)sulfonyl]toluol, p-[(Brommethyl)sulfonyl]toluol, p-[(Diiodmethyl)sulfonyl]pyridin, p-[(Diiodmethyl)sulfonyl]pyridin-1-oxid, p-[(Iodmethyl)sulfonyl]pyridin, p-[(Iodmethyl)sulfonyl]pyridin-1-oxid, p-[(Dibrommethyl)sulfonyl]pyridin, p-[(Dibrommethyl)sulfonyl]pyridin-1-oxid, p-[(Brommethyl)sulfonyl]pyridin, p-[(Brommethyl)sulfonyl]pyridin-1-oxid, (2-Chlor-2-cyanovinyl)-phenylsulfon, 3,3,4,4-Tetrachlor-tetrahydro-1,1-dioxo-thiophen, [(Tribrommethyl)sulfonyl]benzol, [(Brom-nitro-methyl)sulfonyl]benzol, [(Dibrom-nitro-methyl)sulfonyl]benzol, [[(Dibrommethyl)sulfonyl]methyl]benzol, (2-Iod-1-propenyl)-phenylsulfon, (2-Chlor-1-hexenyl)-phenylsulfon.

Als Elektrophile sind ferner geeignet Verbindungen gemäß der allgemeinen Strukturformel I, 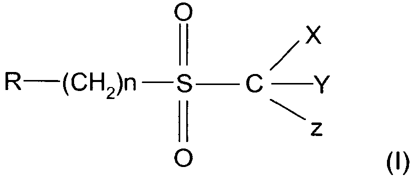 wobei
R ausgewählt ist aus der Gruppe H; Alkyl; Cycloalkyl, Aralkyl, Aryl, Alkoxyaryl und Heteroaryl, wobei die Gruppen Alkyl; Cycloalkyl, Aralkyl, Aryl, Alkoxyaryl und Heteroaryl gegebenenfalls mit einem oder mehreren Substituenten substituiert sind.
Die Substituenten sind dabei unabhängig voneinander ausgewählt aus der Gruppe Fluor, Chlor, Brom, Iod, Hydroxy, gegebenenfalls substituiertem Alkyl, gegebenenfalls substituiertem Aryl, gegebenenfalls substituiertem Heteroaryl, gegebenenfalls substituiertem Aralkyl, Alkoxy, Amino, Nitro, Carboxy, Carboalkoxy, Cyano, Alkylamino, Hydroxyalkyl, Mercaptyl, Alkylmercaptyl, Trihaloalkyl, Carboxyalkyl, Carbamoyl, -(C₁-C₇)Alkyl, -PF₃, -O-(C₁-C₇)-Alkyl, - NH-(C₁-C₄)-Alkyl, -N((C₁-C₄)-Alkyl)₂, -NH-CHO, -NH-CO-(C₁-C₄)-Alkyl, -CO-NH₂, -CO-NH-(C₁-C₄)Alkyl, -CO-N((C₁-C₄)Alkyl)₂ und -CO-OH.
X, Y und Z sind unabhängig voneinander ausgewählt aus der Gruppe Wasserstoff, Fluor, Chlor, Brom und Iod wobei mindestens eine von X, Y und Z ein Halogenatom ist. Gemäß einer weiteren bevorzugten Ausführungsform der Erfindung sind X, Y und Z unabhängig voneinander ausgewählt aus der Gruppe Wasserstoff, Fluor, Chlor, Brom und Iod, wobei mindestens zwei ein Halogenatom sind. Gemäß einer besonders bevorzugten Ausführungsform der Erfindung sind X, Y und Z unabhängig voneinander ausgewählt aus der Gruppe Wasserstoff, Fluor, Chlor, Brom und Iod, und haben ein Gesamtatomgewicht von größer 110.
n ist eine ganze Zahl von 0 bis 4. Gemäß einer bevorzugten Ausführungsform der Erfindung ist n eine Ganze Zahl von 0 bis 2, besonders bevorzugt ist n gleich 0.
"Alkyl" bedeutet eine gesättigte aliphatische Kohlenwasserstoffgruppe, die geradkettig oder verzweigt sein kann und von 1 bis 20 Kohlenstoffatome in der Kette haben kann. Bevorzugte Alkylgruppen können geradkettig oder verzweigt sein und von 1 bis zu 10 Kohlenstoffatome in der Kette aufweisen. Verzweigt bedeutet, dass eine Nieder-Alkylgruppe, wie Methyl, Ethyl oder Propyl, an eine lineare Alkylkette angebracht ist. Bei Alkyl handelt es sich beispielsweise um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyll-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl und 1-Octadecyl. "Substituiertes Alkyl" bedeutet, dass die Alkylgruppe mit einem oder mehreren Substituenten ausgewählt aus Alkyl, gegebenenfalls substituiertem Aryl, gegebenenfalls substituiertem Aralkyl, Alkoxy, Amino, Nitro, Carboxy, Carboalkoxy, Cyano, Alkylamino, Halo, Hydroxy, Hydroxyalkyl, Mercaptyl, Alkylmercaptyl, Trihaloalkyl, Carboxyalkyl oder Carbamoyl substituiert ist.
"Cycloalkyl" bedeutet einen aliphatischen Ring, der von 3 bis ungefähr 10 Kohlenstoffatome in den Ring hat. Bevorzugte Cycloalkylgruppen haben von 4 bis ungefähr 7 Kohlenstoffatome in dem Ring.
"Aralkyl" bedeutet eine Alkylgruppe, die mit einem Arylrest substituiert ist, wobei "Aryl" Phenyl oder Naphthyl bedeutet. "Substituiertes Aralkyl" und "substituiertes Aryl" bedeutet, dass die Arylgruppe oder die Arylgruppe der Aralkylgruppe mit einem oder mehreren Substituenten ausgewählt aus Alkyl, Alkoxy, Amino, Nitro, Carboxy, Carboalkoxy, Cyano, Alkylamino, Halo, Hydroxy, Hydroxyalkyl, Mercaptyl, Alkylmercaptyl, Trihaloalkyl, Carboxyalkyl oder Carbamoyl substituiert ist.
"Alkoxy" bedeutet eine Alkyl-O-Gruppe, in der "Alkyl" die vorstehend beschriebene Bedeutung hat. Nieder-Alkoxy-Gruppen sind bevorzugt. Als beispielhafte Gruppen sind Methoxy, Ethoxy, n-Propoxy, i-Propoxy und n-Butoxy einbezogen.
"Nieder-Alkyl" bedeutet eine Alkylgruppe, die 1 bis ungefähr 7 Kohlenstoffatome aufweist.
"Alkoxyalkyl" bedeutet eine Alkylgruppe wie vorstehend beschrieben, die mit einer Alkoxygruppe, wie vorstehend beschrieben, substituiert ist.
"Halogen" (oder "halo") bedeutet Chlor (chloro), Fluor (fluoro), Brom (bromo) oder Iod (iodo).
"Heterocyclyl" bedeutet eine ungefähr 4 bis ungefähr 10-gliedrige Ringstruktur, in der eines oder mehrere der Ringatome ein anderes Element als Kohlenstoff ist, beispielsweise N, O oder S. Heterocyclyl kann aromatisch oder nicht-aromatisch sein, d.h. es kann gesättigt, teilweise oder ganz ungesättigt sein.
Als bevorzugte Heterocyclyl-Gruppen sind einbezogen: Pyridyl, Pyridazinyl, Pyrimidinyl, Isochinolinyl, Chinolinyl, Chinazolinyl, Imidazolyl, Pyrrolyl, Furanyl, Thienyl, Thiazolyl, Benzothiazolyl, Piperidinyl, Pyrrolidinyl, Tetrahydrofuranyl, Tetrahydropyranyl und Morphonlinyl-Gruppen.
"Substituiertes Heterocyclyl" bedeutet, dass die Heterocyclyl-Gruppe mit einem oder mehreren Substituenten substituiert ist, wobei als Substituenten einbezogen sind: Alkoxy, Alkylamino, Aryl, Carbalkoxy, Carbamoyl, Cyano, Halo, Heterocyclyl, Trihalomethyl, Hydroxy, Mercaptyl, Alkylmercaptyl oder Nitro.
"Hydroxyalkyl" bedeutet eine Alkylgruppe, die mit einer Hydroxygruppe substituiert ist. Hydroxy-Niederalkyl-Gruppen sind bevorzugt. Als beispielhaft bevorzugte Gruppen sind einbezogen: Hydroxymethyl, 2-Hydroxyethyl, 2-Hydroxypropyl und 3-Hydroxypropyl.
"Carboxyl" bedeutet eine COOH-Gruppe.
"Alkoxycarbonyl" bedeutet eine Alkoxy-C=O-Gruppe.
"Aralkoxycarbonyl" bedeutet eine Aralkyl-O-C=O-Gruppe.
"Aryloxycarbonyl" bedeutet eine Aryl-O-C=O-Gruppe.
"Carbalkoxy" bedeutet einen Carboxyl-Substituenten, der mit einem Alkohol der Formel CₙH₂ₙ₊₁OH verestert ist, wobei n von 1 bis ungefähr 6 ist.
"Carbamoyl" bedeutet eine 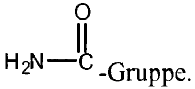 Alkylcarbamoyl und Dialkylcarbamoyl bedeutet, dass der Stickstoff des Carbamoyls durch eine beziehungsweise zwei Alkylgruppen substituiert ist.
"Alkoxyalkyl" bedeutet eine Alkylgruppe wie vorstehend beschrieben, die mit einer Alkoxygruppe, wie vorstehend beschrieben, substituiert ist.

Verbindungen der vorstehend definierten allgemeinen Formel I sind bekannt und werden beispielsweise in der US-B 3,615,745 beschrieben.

Gemäß einer bevorzugten Ausführungsform ist die Verbindung bzw. sind die Verbindungen gemäß der allgemeinen Formel I ausgewählt aus der Gruppe bestehend aus 4-Toloyldiiodmethylsulfon, Phenyldiiodmethylsulfon, 4-Toloyl-dibrommethylsulfon, 4-Toloyltribrommethylsulfon, 4-(methylamido)-Phenyl-diiodmethylsulfon, n-Heptyldiiodmethylsulfon, 4-Aminophenyldiidmethylsulfon, 4-Chlorphenyldiiodmethylsulfon, 4-tert-butyl-Phenyldiiodmethylsulfon, 3-toloyl-Diiodmethylsulfon, 2-toloyl-Diiodmethylsulfon, 4-Bromphenyldiiodmethylsulfon, 2-Methyl-4-chlorphenyldiiodmethylsulfon, α-Naphthyldiiodmethylsulfon, 2-Methyl-4-bromphenyldiiodmethylsulfon, 3-Methyl-4-bromphenylddiiodmethyl-sulfon, n-butyl-Diiodmethylsulfon, Benzyldiiodmethylsulfon, 2,4-Dimethylphenyl-diiodmethylsulfon, 3,4-Dichlorphenyldiiodmethylsulfon, 4-Chlorphenyldibrom-methylsulfon, 4-Methoxyphenyldibrommethylsulfon, Ethyldiiodmethylsulfon, tert-butyl-Diiodmethylsulfon, 4-Chlorphenyltribrommethylsulfon, 4-Methoxyphenyltri-bromethylsulfon, Benzyliodomethylsulfon, Ethyldiiodmethylsulfon, 2-Methyl-4-tert-butylphenyldiiodmethylsulfon, 2-Nitro-4-methylphenyldibrommethylsulfon, 2-Nitro-4-methylphenyltribrommethylsulfon, 3-Tolyltribrommethylsulfon, 4-tert-Butylphenylbrommethylsulfon, 2-Nitro-4-methylphenyliodomethylsulfon, 4-Chlorbenzyldiiodmethylsulfon, 2-Nitro-4-chlorphenyliodomethylsulfon, 2-Nitro-4-chlor-phenyltribrommethylsulfon, 4-Nitrophenyldiiodmethylsulfon, 2-Methyl-4-tert-butylphenyltribrommethylsulfon, 2-Nitro-4-chlorphenyldiiodmethylsulfon, 2-Iso-propylphenylbrommethylsulfon, 2-Isopropylphenyldiiodmethylsulfon, 4-Nitro-phenyltribrommethylsulfon, 4-(2,2-Dimethylpropyl)phenyldiiodmethylsulfon, 4-Chlorbenzyldiiodmethylsulfon, Cyclohexyldiiodmethylsulfon, n-Pentyldiiod-methylsulfon, n-Hexyldiiodmethylsulfon, n-Propyldiiodmethylsulfon, n-Octyldiiod-methylsulfon, 4-Methylbenzyldiiodmethylsulfon, 4-Fluorbenzyldiiodmethylsulfon, 4-Brombenzyldiidmethylsulfon, 4-Methoxybenzyldiiodmethylsulfon, 3-Chlorbenzyldiiodmethylsulfon, 3,5-Dimethyldiiodmethylsulfon, 1-Phenyl-2-(diiod-methylsulfonyl)ethan, 3-Brombenzyldiiodmethylsulfon, 2-Naphthylmethyldiiod-methylsulfon, 1-Phenyl-3-(diiodmethylsulfonyl)propan, Isobutyldiiodmethylsulfon, 3,4-Dimethylbenzyldiiodmethylsulfon, 3,3-Dimethylpropyldiiodmethylsulfon, 2,2,4,4-Tetramethylbutyldiiodmethylsulfon, 4-Fluorobenzyldibrommethylsulfon, 3-Chlorbenzyldibrommethylsulfon, 4-Brombenzyldibrommethylsulfon, 3,4-Dichlorbenzyldibrommethylsulfon, 2,4-Dichlorbenzyldibrommethylsulfon, 3-Brom-benzyldibrommethylsulfon, 2-Brombenzyldibrommethylsulfon, 2-Chlorobenzyldibrommethylsulfon, 4-Methylbenzyldibrommethylsulfon, 2-Methylbenzyldibrom-methylsulfon, 3-Methylbenzyldibrommethylsulfon, 4-Nitrobenzyldibrommethylsulfon, 4-Methoxybenzyldibrommethylsulfon, 2,5-Dimethylbenzyldibrommethyl-sulfon, 3,4-Dimethylbenzyldibrommethylsulfon, 1-Phenyl-2-dibrommethylsulfonyl-ethan, 1-Phenyl-3-(dibrommethylsulfonyl)-propan, Cyclohexyldibrommethylsulfon, n-Heptyldibrommethylsulfon, n-Decyldibrommethylsulfon, n-Hexadecyldibrom-methylsulfon, 3-Methylpropyldiiodmethylsulfon und n-Decyldiiodmethylsulfon.
- Halomethyl-substituierte Pyridinderivate wie an Position 2 und/oder 4 und/oder 6 des Pyridinringes durch Halomethylgruppen mono-, di-, oder trisubstituierte Pyridine bzw. die entsprechenden Pyridin-1-oxide, z.B. 2,6-Bis-Diiodmethylpyridin bzw. 2,6-Bis-Diiodmethyl-pyridin-1-oxid, 2,6-Bis-Iodmethyl-pyridin bzw. 2,6-Bis-Iodmethyl-pyridin-1-oxid, 2,6-Bis-Dibrommethyl-pyridin bzw. Dibrommethyl-pyridin-1-oxid, 2,6-Bis-Brommethyl-pyridin bzw. 2,6-Bis-Brommethyl-pyridin-1-oxid, 4-Dibrommethyl-pyridin bzw. 4-Dibrommethyl-pyridin-1-oxid, 4-Diiodmethyl-pyridin bzw. 4-Diiodmethyl-pyridin-1-oxid 4-Brommethyl-pyridin bzw. 4-Brommethyl-pyridin-1-oxid, 4-Iodmethyl-pyridin bzw. 4-Iodmethyl-pyridin-1-oxid, 4-Bromnitromethyl-pyridin bzw. 4-Bromnitromethyl-pyridin-1-oxid. Weitere Beispiele für Halomethyl-substituierte Pyridinderivate sind die 2-und/oder 4- halomethyl-substituierten Chinolin-Derivate bzw. Chinolin-1-oxid und dessen Derivate.
- Aktivierte Vinylverbindungen und Halovinylverbindungen gemäß Formel (II) wie z.B. Vinylaldehyde, Vinylcarbonsäuren, Vinylsulfonsäurederivate, 2-Vinyl- und 4-Vinyl-pyridinderivate wie 2-Vinyl-pyridin und 2-Vinyl-pyridin-1-oxid, 4-Vinyl-pyridin und 4-Vinyl-pyridin-1-oxid, (2-Brom-2-nitro-ethenyl)-benzol

Weitere geeignete Elektrophile (A) sind N-(2-Iod-1-Iodmethyl-ethyl)benzolsulfonamid, Allyl-p-tolyl-sulfon, 3-Brommethylpyridinhydrobromid und 3-Brommethylpyridinhydroiodid.

Des Weiteren sind als Elektrophile (A) geeignet akzeptorsubstituierte aktivierte Aromaten, die in der Lage sind, nukleophile Substitutionsreaktionen einzugehen, z.B. 2,4,5,6-Tetrachlor-1,3-dicyanobenzol (Chlorthalonil), 2,3,5,6-Tetrachlor-4-(methylsulfonyl)-pyridin, 3,3,4,4-Tetrachlor-tetrahydro-1,1-dioxo-thiophen, 4,5-Dichlor-3H-1,2-dithiol-3-on, 2,4-Dichlor-6-(2-chloranilin)-1,3,5-triazin,

Weitere geeignete Elektrophile (A) sind Dimethyldicarbonat (DMDC), 1-Iod-2-propin-1-ol (IPA), 1,1,2-Triiod-propen(1)-3-ol, Iodoform, 3-Iodpargyl-N-butylcarbamat (IPBC), 3-Iodpropargyl-N-phenylcarbamat (IPPC), 3-Iodpropargylcarbamat (IPC), Maleimid und Maleimid-Derivate, Fulvene und akzeptorsubstituierte Fulvenderivate, Hydroxylamin-o-sulfonsäure.

Weitere geeignete Elektrophile (A) sind Phtalimidderivate wie Folpet und Derivate, Fluorfolpet, Captan und Derivate, Captafol, Sulfonamidverbindungen wie Dichlofluanid und Derivate, Toloylfluanid und Derivate, sowie (Methylthio)harnstoff-Derivate wie N-methyl-N'-(3,4-dichlorphenyl)-N'-(dichlorfluormethylthio)harnstoff.

Geeignete Inhibitorkonzentrationen der elektrophilen Verbindungen (A) liegen im Bereich von 1 bis 1000 ppm, bevorzugt im Bereich von 1 bis 100 ppm, besonders bevorzugt im Bereich von 1 bis 25 ppm, und insbesondere bevorzugt im Bereich von 1 bis 10 ppm, bezogen auf dessen Endkonzentration im Gebinde. In einer besonderen Ausführungsform wird die elektrophile Verbindung in einem Verhältnis zum Konservierungsmittel von 1:1000 bis 1000:1, bevorzugt von 1:100 bis 100:1, insbesondere bevorzugt von 1:10 bis 10:1 eingesetzt.

Bevorzugte elektrophile Verbindungen (A) sind Iodoform, Chlorothalonil, Hydroxylamin-o-sulfonsäure, Maleimid, 2,6-Bis-Brommethyl-pyridin-1-oxid, 2,6-Bis-Dibrommethyl-pyridin-1-oxid, 2,6-Bis-Chlormethyl-pyridin, Acetylaceton, Diiodmethan, 2-Dibrom-nitromethyl-3-methyl-pyridin, 2-Iod-1-propenyl-phenylsulfon, 3-Iodmethyl-pyridin hydroiodid, 3-Brommethyl-pyridinhydrobromid, Brommethyl-p-phenyl-sulfon, 2-Brommethyl-6-methyl-pyridin, Diiodmethyl-p-tolyl-sulfon, N-(2-Iod-1-Iodmethyl-ethyl)benzylsulfonamid, N-Trichlormethylthiophthalimid (Folpet), Dichlofluanid, Allyl-p-tolyl-sulfon.

Insbesondere bevorzugte elektrophile Verbindungen (A) sind Iodoform, Chlorothalonil, 3-Iodmethyl-pyridinhydroiodid, 3-Brommethyl-pyridinhydrobromid, 2,6-Bis-Dibrommethyl-pyridin-1-oxid, Diiodmethyl-p-tolyl-sulfon und N-(2-Iod-1-Iodmethyl-ethyl)benzyl-sulfonamid. Selbstverständlich ist es auch möglich, Mischungen der oben genannten elektrophilen Verbindungen (A) zur Verhinderung von Ghost Odor einzusetzen.

Gemäß einer Ausführungsform der Erfindung werden die Inhibitoren aus der Gruppe der Elektrophilen (A), ausgewählt aus der Gruppe Formaldehyd, Methylen-bis-thiocyanat, Dibromcyanobutan, Dibromnitrilpropionamid und 2-Brom-2-nitropropan-1,3-diol (Bronopol), vom Gegenstand der vorliegenden Erfindung nicht mit umfasst.

Geeignete nukleophile Verbindungen (B) sind ausgewählt aus Thiolen, Dithioverbindungen, Aminen wie primären-, sekundären- und tertiären Aminen, Alkylaminen, Hydrazinen, wie Alkylhydrazinen und Phenylhydrazinen, CH-aciden Verbindungen, wie 1,3-Diketoverbindungen oder geminale Sulfonderivate.

Geeignete Inhibitorkonzentrationen für die nukleophilen Verbindung(en) liegen im Bereich von 1 bis 1000 ppm, bevorzugt im Bereich von 1 bis 100 ppm und insbesondere bevorzugt im Bereich von 1 bis 10 ppm, bezogen auf dessen Endkonzentration im Gebinde. In einer besonderen Ausführungsform wird die nukleophile Verbindung in einem Verhältnis zum Konservierungsmittel von 1000:1 bis 1:1000, bevorzugt von 100:1 bis 1:100, insbesondere bevorzugt von 10:1 bis 1:10 eingesetzt. Insbesondere bevorzugte nukleophile Verbindungen sind Iodide wie Natriumiodid oder Kaliumiodid. Selbstverständlich ist es auch möglich, Mischungen der oben genannten nukleophilen Verbindungen (B) einzusetzen.

Gemäß einer Ausführungsform der Erfindung werden die Inhibitoren aus der Gruppe der nukleophilen Verbindungen (B), ausgewählt aus der Gruppe, Cystein, Thiosalicylsäure und deren Amide, Mercaptobenzthiazol, Natriumpyrithion und Zinkpyrithion, vom Gegenstand der vorliegenden Erfindung nicht mit umfasst.

Geeignete Alkylierungsreagenzien (C) sind Verbindungen, die zur Übertragung von unverzweigten oder verzweigten, substituierten oder unsubstituierten C₁-C₁₀-Alkylgruppen geeignet sind, wie Halogencarbonsäuren wie z.B. α-Halogencarbonsäuren wie Bromessigsäure und Iodessigsäure, Alkylhalogenide, Methionin, Benzylhalogenide, Dialkylether, Diarylether, Acrylalkenylether, Sulfonsäurealkylester, ausgenommen sind para-Toluolsulfonsäuremethylester. Geeignete Inhibitorkonzentrationen für das Alkylierungsreagenz oder die Alkylierungsreagenzien (C) liegen im Bereich von 1 bis 1000 ppm, bevorzugt im Bereich von 1 bis 100 ppm und insbesondere bevorzugt im Bereich von 1 bis 10 ppm, bezogen auf dessen Endkonzentration im Gebinde. In einer besonderen Ausführungsform wird das Alkylierungsreagenz in einem Verhältnis zum Konservierungsmittel von 1:1000 bis 1000:1, bevorzugt von 1:100 bis 100:1, insbesondere bevorzugt von 1:10 bis 10:1 eingesetzt. Selbstverständlich ist es auch möglich, Mischungen der oben genannten Alkylierungsmittel (C) einzusetzen.

Gemäß einer Ausführungsform der Erfindung wird der para-Toluolsulfonsäuremethylester aus der Gruppe der Alkylierungsmittel (C) vom Gegenstand der vorliegenden Erfindung nicht mit umfasst.

Unter Antioxidantien (D), die auch als Oxidationsinhibitoren oder Antioxygene bezeichnet werden, werden im Rahmen der vorliegenden Erfindung Stoffe bzw. Verbindungen verstanden, die durch oxidative Prozesse bedingte Veränderungen in dem Beschichtungsmittel vermindern oder sogar vollständig verhindern.

Geeignete Antioxidantien (D) sind beispielsweise durch sterisch hindernde Gruppen substituierte Phenole. Phenole im Rahmen der vorliegenden Erfindung umfassen substituierte und unsubstituierte Phenole, Hydrochinone, Resorcine und Benzcatechine sowie deren Metallkomplexe. Ausgenommen von den vorstehend genannten Verbindungen sind Resorcinol sowie Pyrogallol.
- Geeignete Phenole sind 1,3,5-Tris(3,5-di-tert-butyl-4-hydroxybenzyl)isocyanurat, 1,3,5-Tris[[4-tert-butyl-3-hydroxy-2,6-xylyl]methyl]-1,3,5-triazin-2,4,6(1H,3H,5H)-trion, 2-(1,1-Dimethylethyl)-6-[[3-(1,1-dimethylethyl)-2-hydroxy-5-methylphenyl]methyl]-4-methylphenylacrylat, 2,2',6,6'-Tetra-tert-butyl-4,4'-methylendiphenol, 2,2'-Ethylidenbis[4,6-di-tert-butylphenol], 2,2'-Methylen-bis[6-(1-methylcyclohexyl)-p-kresol], 2',3-Bis[[3-[3,5-di-tert-butyl-4-hydroxy-phenyl]propionyl]]propionhydrazid, 2,4-Bis[(octylthio)methyl]-o-kresol, 2,4-Di-tert-butylphenol, 2,5-Di-tert-butylhydrochinon, 2,5-Di-tert-pentylhydrochinon, 2,6-Di-tert-butyl-4-nonylphenol, 2,6-Di-tert-butyl-p-kresol (Butylhydroxytoluol, BHT), 2,6-Di-tert-butylphenol, 2,6-Di-tert-butyl-α-dimethylamino-p-kresol, 3,3',3",5,5',5"-Hexa-tert-butyl-α,α',α"-(mesitylen-2,4,6-triyl)tri-p-kresol, 4,4',4"-(1-Methylpropanyl-3-yliden)tris[6-tert-butyl-m-kresol], 4-sec-Butyl-2,6-di-tert-butylphenol, Phenol, 4,4'-(1-Methylethyliden)bis-, Reaktionsprodukte mit Isobutylen und Styrol, Diethyl-[[3,5-bis(1,1-dimethylethyl)-4-hydroxyphenyl]methyl]phosphonat, 4-(2-methylprop-2-enyl)phenol, 6,6'-Di-tert-butyl-2,2'-methylendi-p-kresol, 6,6'-Di-tert-butyl-2,2'-thiodi-p-kresol, 6,6'-Di-tert-butyl-4,4'-butylidendi-m-kresol, 6,6'-Di-tert-butyl-4,4'-diethyl-2,2'-methylendiphenol, 6,6'-Di-tert-butyl-4,4'-thiodi-m-kresol, 6-tert-Butyl-2,4-xylenol, 2-tert-Butylhydrochinon, Calciumdiethylbis[[[3,5-bis(1,1-dimethylethyl)-4-hydroxyphenyl]methyl]phosphonat], Ethylenbis[3,3-bis(3-tert-butyl-4-hydroxyphenyl)butyrat], Ethylenbis(oxyethylen)bis[3-(5-tert-butyl-4-hydroxy-m-tolyl)propionat], Hexamethylenbis[3-(3,5-di-tert-butyl-4-hydroxyphenyl)propionat], Hydrochinonmonomethylether, Isotridecyl-3-(3,5-di-tert-butyl-4-hydroxyphenyl)propionate, N,N'-Hexan-1,6-diylbis[3-(3,5-di-tert-butyl-4-hydroxy-phenyl)propionamid], N,N'-Propan-1,3-diylbis[3-(3,5-di-tert-butyl-4-hydroxy-phenyl)propionamid], Octadecyl-3-(3,5-di-tert-butyl-4-hydroxyphenyl)propionate, Pentaerythrittetrakis(3-(3,5-di-tert-butyl-4-hydroxyphenyl)propionat), Phenol, 4-Methyl, Reaktionsprodukte mit Dicyclopentadien und Isobutylen, Phenol, styrolisiert, Thiodiethylenbis[3-(3,5-di-tert-butyl-4-hydroxyphenyl)propionat], Tris(1-phenylethyl)phenol, 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(y-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in der Seitenkette linear oder verzweigt sind, zum Beispiel 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol, Butylhydroxyanisol (BHA), 2,4-Dioctylthiomethyl-6-tert-butylphenol, 2,4-Dioctylthio-methyl-6-methylphenol, 2,4-Dioctylthiomethyl-6-ethylphenol, 2,6-Didodecylthio-methyl-4-nonylphenol, 2,6-Di-tert-butyl-4-methoxyphenol, 2,5-Di-tertbutylhydro-chinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butylhydro-chinon, o-Phenylphenol, 3,5-Di-tert-butyl-4-hydroxyanisol, 3,5-Di-tert-butyl-4-hydroxyphenylstearat, Bis(3,5-di-tert-butyl-4-hydroxyphenyl)adipat.

Weitere geeignete Antioxidantien sind
- Tocopherole, wie δ-Tocopherol, β-Tocopherol, γ-Tocopherol, σ-Tocopherol und Gemische davon (Vitamin E), sowie tocopherolhaltige Extrakte,
- Hydroxylierte Thiodiphenylether, wie 2,2'-Thiobis(6-tert-butyl-4-methylphenol), 2,2'-Thiobis(4-octylphenol), 4,4'-Thiobis(6-tert-butyl-3-methylphenol), 4,4'-Thio-bis(6-tert-butyl-2-methylphenol), 4,4'-Thiobis(3,6-di-sec-amylphenol), 4,4'-Bis(2,6-dimethyl-4-hydroxyphenyl)disulfid,
- Alkylidenbisphenole, wie 2,2'-Methylenbis(6-tert-butyl-4-methylphenol), 2,2'-Methylenbis(6-tertbutyl-4-ethylphenol), 2,2'-Methylenbis[4-methyl-6-(α-methylcyclohexyl)phenol], 2,2'-Methylenbis(4-methyl-6-cyclohexylphenol), 2,2'-Methylenbis(6-nonyl-4-methylphenol), 2,2'-Methylenbis(4,6-di-tert-butylphenol), 2,2'-Ethylidenbis(4,6-di-tert-butylphenol), 2,2'-Ethylidenbis(6-tert-butyl-4-iso-butylphenol), 2,2'-Methylenbis[6-(α-methylbenzyl)4-nonylphenol], 2,2'-Methylen-bis[6-(α,α-dimethylbenzyl)-4-nonylphenol], 4,4'-Methylenbis(2,6-di-tert-butyl-phenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglykol-bis[3,3-bis(3'-tert-butyl-4'-hydroxyphenyl)butyrat], Bis(3-tert-butyl-4-hydroxy-5-methylphenyl)dicyclopentadien, Bis[2-(3'-tert-butyl-2'-hydroxy-5'-methylbenzyl)-6-tert-butyl-4-methylphenyl]terephthalat, 1,1-Bis(3,5-dimethyl-2-hydroxyphenyl)butan, 2,2-Bis(3,5-di-tert-butyl-4-hydroxyphenyl)propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)pentan,
- O-, N- und S- Benzylverbindungen, wie 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis(4-tert-butyl-3-hydroxy-2,6-dimethylbenzyl)dithio-terephthalat, Bis(3,5-di-tert-butyl-4-hydroxybenzyl)sulfid, Isooctyl-3,5-di-tert-butyl-4-hydroxybenzylmercaptoacetat,
- Hydroxybenzylierte Malonate, wie Dioctadecyl-2,2-bis(3,5-di-tert-butyl-2-hydroxybenzyl)malonat, Dioctadecyl-2-(3-tert-butyl-4-hydroxy-5-methylbenzyl)malonat, Didodecylmercaptoethyl-2,2-bis(3,5-di-tertbutyl-4-hydroxybenzyl)-malonat, Bis[4-(1,1,3,3-tetramethylbutyl)phenyl]-2,2-bis(3,5-di-tert-butyl-4-hydro-xybenzyl)malonat,
- Aromatische Hydroxybenzylverbindungen, wie 1,3,5-Tris(3,5-di-tert-butyl-4-hydroxybenzyl)-2,4,6-trimethylbenzyl, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)phenol,
- Triazinverbindungen, wie 2,4-Bis(octylmercapto)-6-(3,5-di-tert-butyl-4-hydroxy-anilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxyphenyl-ethyl)-1,3,5-triazin, 1,3,5-Tris(3,5-di-tert-butyl-4-hydroxyphenylpropioyl)hexa-hydro-1,3,5-triazin, 1,3,5-Tris(3,5-dicyclohexyl-4-hydroxybenzyl)isocyanurat, 2-tert-butyl-4-cyclopropyl-6-(methylthio)-1,3,5-triazin-2,4-diyldiamin,
- Acylaminophenole, wie 4-Hydroxylauranilid, 4-Hydroxytearanilid, Octyl-N-(3,5-di-tert-butyl-4-hydroxyphenyl)carbamat,
- Ester von β-(3,5-Di-tert-butyl-4-hydroxyphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglykol, 1,2-Propandiol, Neopentylglykol, Thiodiethylenglykol, Diethylenglykol, Triethylenglykol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, ganz besonders geeignet und bevorzugt ist dabei der Ester mit Octadecanol (IRGANOX 1076 ® der Ciba Spec.),
- Ester von β-(5-tert-Butyl-4-hydroxy-3-methylphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglykol, 1,2-Propandiol, Neopentylglykol, Thiodiethylenglykol, Diethylenglykol, Triethylenglykol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan,
- Ester von β-(3,5-Dicyclohexyl-4-hydroxyphenyl)propionsäure mit ein- oder mehrwertigen Alkoholen, z.B. mit Methanol, Ethanol, Octanol, Octadecanol, 1,6-Hexandiol, 1,9-Nonandiol, Ethylenglykol, 1,2-Propandiol, Neopentylglykol, Thiodiethylenglykol, Diethylenglykol, Triethylenglykol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan,
- Ester von 3,5-Di-tert-butyl-4-hydroxyphenylessigsäure mit ein- oder mehrwertigen Alkoholen, z.B. mit Methanol, Ethanol, Octanol, Octadecanol, 1,6-Hexandiol, 1,9-Nonandiol, Ethylenglykol, 1,2-Propandiol, Neopentylglykol, Thiodiethylenglykol, Diethylenglykol, Triethylenglykol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxa-bicyclo[2.2.2]octan.
- Amide von β-(3,5-Di-tert-butyl-4-hydroxyphenyl)propionsäure, z.B. N,N'-Bis(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpropionyl)hydrazid, N,N'-Bis[2-(3-[3,5-di-tert-butyl-4-hydroxy-phenyl]propionyloxy)ethyl]oxamid (Naugard® XL-1 von Uniroyal),
- Ascorbinsäure (Vitamin C), Isoascorbinsäure sowie Verbindungen und Salze der Ascorbinsäure und der Isoascorbinsäure wie Natriumascorbat, Calciumascorbat, Ascorbylpalmitat, Ascorbylstearat, Natriumisoascorbat, Calciumisoascorbat,
- Aminische Antioxidantien, wie N,N'-Diisopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis-[(2-methylphenyl)amino]ethan, 1,2-Bis(phenyl-amino)propan, o-Tolyl)-biguanid, Bis[4-(1',3'-dimethylbutyl)phenyl]amin, tertoctyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl-4H-l,4-benzothiazin, Phenothiazin, ein Gemisch von mono- und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-bis(2,2,6,6-tetramethylpiperid-4-ylhexamethylendiamin, Bis(2,2,6,6-tetramethylpiperid-4-yl)sebacat, 2,2,6,6-Tetramethylpiperidin-4-on, 2,2,6,6-Tetra-methylpiperidin-4-ol, 1,4-Benzoldiamin, N,N'-gemischte Phenyl- und Toluolderivate, 4'-Anilinotoluol-4-Sulfonanilid, 4-(1-Methyl-1-phenylethyl)-N-[4-(1-methyl-1-phenylethyl)phenyl]aniline, Benzolamin, 2-Ethyl-N-(2-ethylphenyl)-, (Tripropenyl)derivate, Benzenamin, N- {4-[(1,3-Dimethylbutyl)imino]-2,5-cyclohexadien-1-ylidin}, Benzolamin, N-Phenyl-, Reaktionsprodukte mit 2,4,4-Trimethylpenten, Bis(4-octylphenyl)amin, Diphenylamin, Niedrigtemperatur-Reaktionsprodukte von Diphenylamine und -aceton, Ethoxyquin, N-1-Naphthyl-anilin, N-1,3-Dimethylbutyl-N'-phenyl-p-phenylendiamin, N-Isopropyl-N'-phenyl-p-phenylendiamin, N,N'-Bis(1,4-dimethylpentyl)-p-phenylendiamin, N,N'-Di-2-naphthyl-p-phenylendiamin, N,N'-Di-sec-butyl-p-phenylendiamin, N,N'-Diphenyl-p-phenylendiamin, Polymerisiertes 1,2-dihydro-2,2,4-trimethylquinolin.
- Thiosynergisten wie Dilaurylthiodipropionat und/oder Distearylthiodipropionat.
- Phosphorhaltige Verbindungen wie Orthophosphorsäure, Phosphate, Natriumortophosphorsäure, Mono-Natriumphosphat, Di-Natriumphosphat, TriNatriumphosphat, Kaliumortophosphorsäure, Mono-Kaliumorthophosphat, Di-Kaliumorthophosphat, Tri-Kalkumorthophosphat, Calciumorthophosporsäure, Mono-Calciumorthophosphat, Di-Calciumorthophosphat, Tri-Calciumorthophosphat, 2,4,6-Tri-t-butylphenyl 2 butyl-2-ethyl-1,3-propanediol Phosphat, 3,9-Bis(2,4-di-tert-butylphenoxy)-2,4,8,10-tetraoxa-3,9-diphosphaspiro[5.5]undecane, Bis(2,4-dicumylphenyl) pentaerythritol-Diphosphit, Bis(2,4-di-tert-butyl-6-methylphenyl)ethyl-Phosphat, Isodecyldiphenylphosphit, Isooctyldiphenylphosphit, O,O'-Dioctadecylpentaerythritbis(phosphit), Phosphortrichlorid, Reaktionsprodukte mit 1,1'-biphenyl und 2,4-bis (1,1-dimethyl)-Phenol, Tetrakis(2,4-di-tert-butylphenyl)-[1,1-biphenyl]-4,4'-diylbisphosphonit, Tributylphosphit, Tridodecylphosphit, Triisodecylphosphit, Triphenylphosphit, Tris(2,4-ditert-butylphenyl)phosphit, Tris(nonylphenyl)phosphit, Tris[4,4'-thiobis[3-methyl-6-tert-butylphenol]]phosphit, Lecithin
- Thioester wie 2,2-Bis[[3-(dodecylthio)-1-oxopropoxy]methyl]propan-1,3-diylbis[3-(dodecylthio)propionat], Di(tridecyl)-3,3'-Thiodipropionat, Didodecyl 3,3'-Thio-dipropionat, Dioctadecyl-3,3'-Thiodipropionat, Ditetradecyl-3,3'-thiobispropionat,
- Metall-Thiolate wie 1,3-Dihydro-4(oder-5)-methyl-2H-benzimidazol-2-thion, ZinkSalz (2:1), Bis(diisobutyldithiocarbamat)nickel, Nickelbis(dibutyldithiocarbamat), Zink-Bis(dibutyldithiocarbamat), Zinkdi(benzimidazol-2-yl)disulfid,
- weitere schwefelhaltige Verbindungen wie Dioctadecyldisulfid, 1,3-Dihydro-4(oder-5)-methyl-2H-benzimidazol-2-thion, Benzimidazol-2-thiol,
- Gallussäure und Verbindungen und Salze der Gallussäure wie Propylgallat, Octylgallat, Dodecylgallat,
- Milchsäure, Citronensäure, Weinsäure, Metaweinsäure und Verbindungen und Salze dieser Verbindungen wie Natriumlactat, Kaliumlactat, Calciumlactat, Natriumcitrat, Kaliumcitrat, Calciumcitrat, Ammoniumcitrat, Weinsäure und Tatrate, Mono- und Di-Tatrate, Kaliumtatrate, Weinstein, Natriumkaliumtatrat, Calciumtatrat,
- Schwefeldioxid, schweflige Säure bzw. deren Salze, sowie Natriumsulfit, Natriumbilsulfit, Natriumdisulfit, Kaliumsulfit, Calciumsulfit, Calciumhydrogensulfit, Kaliumbisulfit,
- Carotinoide ausgewählt aus Astaxanthin, β-Carotin, Canthaxanthin, Capsanthin, Capsorubin, Cryptoxanthin, Lutein, Luteoxanthin, Lycopin, Zeaxanthin,
- Polyphenole, wie Flavonoide und Anthocyane ausgewählt aus Quercetin, Rutin, Kaempferol, Myricetin, Isorhamnetin, Luteolin, Apigenin, Morin, Catechin, Gallocatechin, Epicatechin, Epigallocatechingallat, Theaflavin, Thearubigin, Hesperetin, Naringenin, Eriodictyol, Taxifolin, Genistein, Daidzenin, Licoricidin, Cyanidin, Delphinidin, Malvidin, Pelargonidin, Peonidin, Petunidin,
- Malonsäure, Adipinsäure und Verbindungen und Salze der Malonsäure und Adipinsäure wie Natriummalat, Kaliummalat, Calciummalat, Natriumadipat, Kaliumadipat, Calciumadipat,
- weitere Antioxidantien wie Bernsteinsäure, Calciumdinatriumethylendiamintetraacetat, Zinn(II)chlorid, Glutathion und Selen.
- Antioxidativ wirksame Enzyme wie Superoxiddismutase, Glutathionperoxidase und Katalase.

Weitere geeignete Antioxidantien sind insbesondere oxidierbare, ungesättigte Verbindungen, wie ungesättigte Harze. Im Rahmen der Erfindung können dabei vorzugsweise natürliche und modifizierte Harze verwendet werden, z. B. Gummiharze, Holzharze, Kollophoniumharze, Ölharze, destillierte Harze, hydrierte Harze, dimerisierte und polymerisierte Harze. Weiterhin können auch Ester, insbesondere Glyzerin- oder Pentaerythritolester von natürlichen oder modifizierten Harzen verwendet werden, insbesondere Glyzerinester von Holzharzen, Glyzerinester von hydrierten Harzen oder dergleichen, ferner können auch aliphatische, aromatische oder gemischt aliphatisch/aromatische Kohlenwasserstoffharze und phenolisch modifizierte Terpenharze oder deren hydrierte Derivate eingesetzt werden. Selbstverständlich können auch Mischungen der vorstehend genannten oxidierbaren, ungesättigten Verbindungen eingesetzt werden.

Unter den vorstehend genannten Verbindungen sind dem Fachmann einige Verbindungen auch als Klebrigmacher bzw. Tackifier bekannt. Diese Tackifier sind bevorzugt ausgewählt aus der Gruppe der aliphatischen und aromatischen Kohlenwasserstoff-Harze, Polymeren aus aliphatischen C₅-Piperylen-Körpern oder aromatischen C₉-Körpern, Kolophonium Harzen und Leinöl.

Eine besonders bevorzugt im Rahmen der Erfindung eingesetzte oxidierbare, ungesättigte Verbindung ist Foral TM 85 E von Eastman, ein Ester eines hydrierten Harzes bzw. Tacolyn 100 Resin Dispersion, ebenfalls von Eastman.

Die vorstehend genannten Antioxidantien können allein oder in Mischung mit einem Antioxidans oder mehreren Antioxidantien eingesetzt werden.

Geeignete Inhibitorkonzentrationen für das Antioxidans (D) liegen im Bereich von 1 bis 10.000 ppm, bevorzugt im Bereich von 1 bis 5.000 ppm und insbesondere bevorzugt im Bereich von 1 bis 1.000 ppm, insbesondere bevorzugt im Bereich von 1 bis 500 ppm bezogen auf dessen Endkonzentration im Gebinde. In einer besonderen Ausführungsform wird das Antioxidans (D) in einem Verhältnis zum Konservierungsmittel von 1:1000 bis 1000:1, bevorzugt von 1:100 bis 100:1, insbesondere bevorzugt von 1:10 bis 10:1 eingesetzt.

Als Antioxidantien besonders geeignet sind Butylhydroxytoluol (BHT), Butylhydroxyanisol (BHA), 2,5-Di-tert-butylhydrochinon, 3,5-Di-tert-butylhydrochinon, Propylgallat, Ascorbinsäure, Isoascorbinsäure.

Gemäß einer Ausführungsform der Erfindung ist der Geruchsverhinderer (D) ausgewählt aus der Gruppe bestehend aus 2,5-Di-tertbutylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butylhydrochinon, o-Phenylphenol, 3,5-Di-tert-butyl-4-hydroxyanisol, 3,5-Di-tert-butyl-4-hydroxyphenylstearat, Bis(3,5-di-tert-butyl-4-hydroxyphenyl)adipat.

Die Erfindung betrifft ferner ein Beschichtungsmittel, enthaltend 10 bis 1.000 ppm 2-Methyl-4-isothiazolin-3-on und/oder 10 bis 1.000 ppm 2-n-Octyl-4-isothiazolin-3-on, sowie 200 bis 1.000 ppm eines oder mehrerer Geruchsverhinderer(s) ausgewählt aus der Gruppe bestehend aus 2,5-Di-tertbutylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butylhydrochinon, o-Phenylphenol, 3,5-Di-tert-butyl-4-hydroxyanisol, 3,5-Di-tert-butyl-4-hydroxyphenylstearat, Bis(3,5-di-tert-butyl-4-hydroxyphenyl)adipat. Gemäß einer weiteren Ausführungsform betrifft die Erfindung eine Innen- bzw. Außendispersionsfarbe, die Titandioxid, 10 bis 1.000 ppm 2-Methyl-4-isothiazolin-3-on und/oder 10 bis 1.000 ppm 2-n-Octyl-4-isothiazolin-3-on und 1 bis 1.100 ppm, bevorzugt 9 bis 510 ppm besonders bevorzugt 9 bis 210 ppm eines oder mehrerer Geruchsverhinderer(s) ausgewählt aus der Gruppe 2,5-Di-tertbutylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butylhydrochinon, o-Phenylphenol, 3,5-Di-tert-butyl-4-hydroxyanisol, 3,5-Di-tert-butyl-4-hydroxyphenylstearat, Bis(3,5-di-tert-butyl-4-hydroxyphenyl)adipat enthält. Vorteilhafterweise lässt sich hierdurch sowohl das Vergrauen der Dispersionsfarbe als auch das Auftreten von Ghost Odor vermindern.

Unter Oxidationsmittel(n) gemäß der vorliegenden Erfindung werden Verbindungen verstanden, die andere Verbindungen oxidieren können, und selbst dabei reduziert werden. Oxidationsmittel können Elektronen aufnehmen, während die Reduktionsmittel sie abgeben. Geeignete Oxidationsmittel (E) sind Verbindungen ausgewählt aus der Gruppe der Bromate, Iodate, wie Natrium- und Kaliumiodat, bzw. Natrium- und Kaliumbromat, bzw. Natrium- und Kaliumbromit, Peroxide, Wasserstoffperoxid, Zinkperoxid, Benzoylperoxid, Kaliumperoxid, Natriumperborat, Kaliumperborat, Natriumpersulfat, Natriumpercarbonat, Natriumhypochlorid, Ammoniumhypochionat, Kaliumpercarbonat, Ammoniumpercarbonat, Ammoniumpersulfat, Kaliumpersulfat, tert.-Butyl-hydroperoxid, Magnesiummonoperoxyphthalate, Natriumperoxide, Harnstoffhydrogenperoxide, Magnesiumperoxide, Kalziumperoxide, Natriumperborat, Natriumperborattetrahydrat, Peroxyessigsäure, Halogene und Halogenfreisetzende Verbindungen, Chlor, Natrionhypochlorid, Kalziumhypochlorid, hypobromige Säure, Chlordioxid, Chloramine-T, Dichlorisocyanursäure sowie deren Natriumsalz, Trichlorisocyanursäure, Trichlormelamin (TCM), N-Chlorsuccinimid (NCS), N-Bromsuccinimid (NBS), 1,3-Dichlor-5,5-dimethylhydantoin (DCDMH), 1-Brom-3-chlor-5,5-dimethylhydantoin (BCDMH), Poly(vinylpyrrolidon)iodid, Natriumiodat. Allgemein liegt die Inhibitorkonzentration bei Kaliumbromat im Bereich von 1 bis 1.000 ppm, bevorzugt bei 1 bis 100 ppm.

Geeignete Inhibitorkonzentrationen für das Oxidationsmittel (E) liegen im Bereich von 1 bis 1000 ppm, bevorzugt im Bereich von 1 bis 100 ppm und insbesondere bevorzugt im Bereich von 1 bis 10 ppm, bezogen auf dessen Endkonzentration im Gebinde. In einer besonderen Ausführungsform wird das Oxidationsmittel (E) in einem Verhältnis zum Konservierungsmittel von 1:1000 bis 1000:1, bevorzugt von 1:100 bis 100:1, insbesondere bevorzugt von 1:10 bis 10:1 eingesetzt.

Gemäß einer Ausführungsform der Erfindung werden Resorcinol und Pyrogallol aus der Gruppe der Oxidationsmittel (E) vom Gegenstand der vorliegenden Erfindung nicht mit umfasst.

Gemäß der vorliegenden Erfindung kann zur Verhinderung des Auftretens von Ghost Odor ein einzelner Inhibitor oder auch zwei oder mehr Inhibitoren eingesetzt werden. Bei Einsatz von zwei oder mehr Inhibitoren können diese aus zwei oder mehr der Gruppen A, B, C, D oder E stammen, oder nur aus einer der Gruppen. Die Kombination von Inhibitoren aus der Gruppe E mit Inhibitoren aus der Gruppe D ist dabei weniger bevorzugt. Bei Kombinationen von Inhibitoren können die vorstehend angegebenen Konzentrationen gegebenenfalls niedriger ausfallen als die genannten Werte. Ursache dafür kann Synergismus unter den einzelnen Inhibitoren sein.

Weiterhin Gegenstand der Erfindung sind Beschichtungsmittel, enthaltend Methyl-4-isothiazolin-3-on und/oder Octyl-4-isothiazolin-3-on, sowie einen oder mehrere Inhibitor(en) ausgewählt aus der Gruppen bestehend aus Iodoform, Chlorothalonil, Hydroxylamin-o-sulfonsäure, Maleimid, 2,6-Bis-Brommethyl-pyridin-1-oxid, 2,6-Bis-Dibrommethylpyridin-1-oxid, 2,6-Bis-Chlormethylpyridin, Acetylaceton, Diiodmethan, 2-Dibromnitromethyl-3-methyl-pyridin, 2-Iod-1-propenyl-phenylsulfon, 3-Iodmethyl-pyridinhydroiodid, 3-Brommethylpyridinhydrobromid, Brommethyl-p-phenyl-sulfon, 2-Brommethyl-6-methylpyridin, Diiodmethyl-p-toloyl-sulfon, N-(2-Iod-1-Iodmethyl-ethyl)benzylsulfonamid, N-Trichlormethylthiophthalimid, Dichlofluanid, Allyl-p-toloyl-sulfon, Natriumiodid, Kaliumiodid, Bromessigsäure, Iodessigsäure, Alkylhalogenide, Methionin, Benzylhalogenide, Dialkylether, Diarylether, Acrylalkenylether, Sulfonsäurealkylester, Butylhydroxytoluol (BHT), Butylhydroxyanisol (BHA), 2,5-Di-tert-butylhydrochinon, 3,5-Di-tert-butylhydrochinon, Propylgallat, Ascorbinsäure, Isoascorbinsäure, Kaliumiodat, Natriumiodat und Kaliumbromat.

Erfindungsgemäße Beschichtungsmittel, im Sinne der Erfindung auch Gebinde genannt, welche eine Lagerform der Beschichtungsmittel darstellen, sind beispielsweise Lösungsmittel oder wasserbasierte Anstrichmittel für den Innen- und/oder Außenbereich wie Putze, Grundierungen, Wachsemulsionen und Klebstoffe/Dichtstoffe, sowie Farbzusammensetzungen wie Kalkfarben, Leimfarben, Mineralfarben, Naturfarben, Lacke, Lasuren, Emulsionsfarben, Latexfarben, Dispersionsfarben, sowie Edukte und Rohstoffe zur Herstellung solcher Beschichtungsmittel, wie Latices, Polymerdispersionen und Harzdispersionen.

Bevorzugte erfindungsgemäße Beschichtungsmittel sind wasserbasierte Anstrichmittel für den Innen- und Außenbereich wie Putze, Grundierungen, Wachsemulsionen sowie Farbzusammensetzungen wie Kalkfarben, Leimfarben, Mineralfarben, Naturfarben, Lacke, Lasuren, Emulsionsfarben, Latexfarben, Dispersionsfarben, sowie Edukte und Rohstoffe zur Herstellung solcher Beschichtungsmittel, wie Latices, Polymerdispersionen und Harzdispersionen.

Insbesondere bevorzugte erfindungsgemäße Beschichtungsmittel sind wässrige Farbzusammensetzungen für den Innenbereich, wie Dispersions- und Latexfarben.

Die erfindungsgemäßen Beschichtungsmittel enthalten bekannte, dem Fachmann geläufige Inhaltsstoffe. Biese sind beispielsweise Verdickungsmittel, Entschäumer, Stoffe zur Einstellung und Pufferung des pH-Werts, Duftstoffe, Dispergierhilfsmittel und färbende oder verfärbungsvermeidende Stoffe, Komplexierungsagenzien und Stabilisatoren.

Das zur Herstellung des Beschichtungsmittels verwendete Lösungsmittel ist eines ausgewählt aus der Gruppe Wasser, aliphatische Alkohole mit 1 bis 4 Kohlenstoffatomen, wie Ethanol und Isopropanol, ein Glykol, wie Ethylenglykol, Diethylenglykol, 1,2-Propylenglykol, Dipropylenglykol und Tripropylenglykol, ein Glykolether, wie Butylglykol und Butyldiglykol, ein Glykolester, wie Butylglykolacetat oder 2,2,4-Trimethylpentandiolmonoisobutyrat, ein Polyethylenglykol, ein Propylenglykol, N,N-Dimethylformamid oder ein Gemisch aus zwei oder mehr davon. Das polare flüssige Medium ist insbesondere Wasser und/oder Glykol.

Dabei können zur Formulierung bzw. Stabilisierung der Beschichtungsmittel dem Fachmann bekannte Dispergierhilfsmittel, wie dispergierende, wasserlösliche Polymere (allg. Polyanionen) wie Polyacrylsäuren mit einem Molekulargewicht von 1.000 bis 100.000 bzw. Copolymere Acrylsäure mit Maleinsäureanhydrid mit einem Molekulargewicht von 1.000 bis 100.000, aromatische Sulfonsäurekondensate wie Phenolsulfonsäure, Naphtalinsulfonsäure mit Formaldehyd, sowie Siliconharze eingesetzt werden. Ferner können Stabilisatoren wie Xanthane, modifizierte Zellulose, wie Methylzellulose, Polyurethanverdicker sowie Kieselsäure enthalten sein. Ebenfalls anwesend können dem Fachmann bekannte Netzmittel, wie Dioctylsulfosuccinat, C₁₀ bis C₁₃ Fettalkoholethoxylate, EO/PO Blockpolymere, Sulfonate, sowie Entschäumer wie Siliconentschäumer und Füllstoffe, wie Talkum, Kaoline, Titandioxid, Silikate, pyrrogene Kieselsäure und/oder Zeolithe sein.

Üblicherweise enthalten Beschichtungsmittel auch ein oder mehrere der vorstehend genannten Konservierungsmittel. Konservierungsmittel sind üblicherweise in Gesamtkonzentrationen von 1 bis 3000 ppm im Beschichtungsmittel enthalten. Selbstverständlich können auch höhere oder niedrigere Konzentrationen des Konservierungsmittels vorliegen. Das erfindungsgemäße Beschichtungsmittel kann einen oder mehrere Inhibitoren enthalten. Für den Fall, dass mehrere Inhibitoren im Beschichtungsmittel vorliegen, können diese aus der gleichen oder aus verschiedenen Gruppen der oben genannten Inhibitoren ausgewählt werden.

Das Verhältnis der Gesamtkonzentration der eingesetzten Inhibitoren zur Gesamtkonzentration der im erfindungsgemäßen Beschichtungsmittel eingesetzten Konservierungsmittel liegt im Bereich von 1000:1 bis 1:1000, bevorzugt im Bereich von 100:1 bis 1:100, insbesondere bevorzugt im Bereich von 10:1 bis 1:10. Gemäß einer Ausführungsform der Erfindung liegt der Inhibitor bzw. liegen die Inhibitoren in dem Beschichtungsmittel in einer Konzentration vor, die unterhalb ihrer Wirkkonzentration in dem Beschichtungsmittel liegt, d.h., dass sie in dieser Konzentration keinen Beitrag zur Konservierung leisten. Besonders bevorzugt sind dabei Inhibitorkonzentrationen im Bereich von 5 bis 15 ppm, bezogen auf deren Endkonzentration im Beschichtungsmittel.

In einer bevorzugten Ausführungsform enthält das erfindungsgemäße Beschichtungsmittel 2-Methyl-4-isothiazolin-3-on und/oder Octyl-4-isothiazolin-3-on sowie Iodoform und/oder Diiodmethyl-p-tolyl-sulfon in Konzentrationen im Bereich von 1 bis 10.000 ppm, bevorzugt im Bereich von 1 bis 1000 ppm und insbesondere bevorzugt im Bereich von 1 bis 100 ppm.

Die Erfindung betrifft ferner eine biozide Zusammensetzung enthaltend 2-Methyl-4-isothiazolin-3-on und/oder Octyl-4-isothiazolin-3-on, sowie einen oder mehrere Inhibitor(en) ausgewählt aus der Gruppe bestehend aus den vorstehend definierten (A) elektrophilen Verbindung(en), (B) nukleophilen Verbindung(en), (C) Alkylierungsmittel(n), (D) Antioxidantien und (E) Oxidationsmittel(n).

Gemäß einer Ausführungsform der Erfindung enthält die Biozide Zusammensetzung das Methyl-4-isothiazolin-3-on und/oder das Octyl-4-isothiazolin-3-on. Das Verhältnis von Inhibitor zu N-Alkylisothiazolinon liegt dabei allgemein im Bereich von 1000:1 bis 1:1000.

Es ist zweckmäßig, wenn die erfindungsgemäße Biozidzusammensetzung für die Anwendung in Kombination mit einem polaren oder unpolaren flüssigen Medium vorliegt.

Bevorzugte polare flüssige Medien sind Wasser, aliphatische Alkohole mit 1 bis 4 Kohlenstoffatomen, zum Beispiel Ethanol und Isopropanol, ein Glykol, zum Beispiel Ethylenglykol, Diethylenglykol, 1,2-Propylenglykol, Dipropylenglykol und Tripropylenglykol, ein Glykolether, wie Butylglykol und Butyldiglykol, ein Glykolester, wie Butylglykolacetat oder 2,2,4-Trimethylpentandiolmonoisobutyrat, ein Polyethylenglykol, ein Propylenglykol, N,N-Dimethylformamid oder ein Gemisch aus zwei oder mehr solcher Medien. Das polare flüssige Medium ist insbesondere Wasser und/oder Glykol.

Als unpolare flüssige Medien können beispielsweise Aromaten, vorzugsweise Xylol und Toluol dienen, auch diese können alleine oder als Gemische aus zwei oder mehreren solcher Medien eingesetzt werden.

Die erfindungsgemäße Biozidzusammensetzung kann auch gleichzeitig mit einem polaren oder einem unpolaren flüssigen Medium kombiniert werden.

Die erfindungsgemäße Biozidzusammensetzung ist in ihrem pH-Wert allgemein auf einen pH-Wert von 4 bis 7, bevorzugt auf einen Wert von 5 bis 7 eingestellt.

Weiterhin Gegenstand der Erfindung ist ein Verfahren zur Herstellung des erfindungsgemäßen Beschichtungsmittels, sowie zum Unterdrücken von Ghost Odor. Nach dem erfindungsgemäßen Verfahren kann die Zugabe des Inhibitors oder der Inhibitoren zu jedem Zeitpunkt der Herstellung von bekannten, dem Fachmann geläufigen Beschichtungsmitteln bzw. Klebstoffen aus dem Stand der Technik erfolgen. Im Fall einer Farbzusammensetzung aus dem Stand der Technik wird der Inhibitor bzw. die Inhibitoren bevorzugt am Ende des Herstellungsprozesses zur Farbzusammensetzung aus dem Stand der Technik oder in die fertige Farbzusammensetzung aus dem Stand der Technik eingemischt.

Die Zugabe des oder der Inhibitor(en) kann dabei einzeln oder in Kombination mit dem oder den Konservierungsmittel(n) erfolgen. Bevorzugt erfolgt die Zugabe des bzw. der Inhibitor(en) in Kombination mit dem oder den Konservierungsmitteln.

Gemäß einer alternativen Ausführungsform betrifft die Erfindung die Verwendung eines oder mehrerer der vorstehend definierten Inhibitor(s)(en) zur Verhinderung von Ghost Odor in Beschichtungsmitteln, die Methyl-4-isothiazolin-3-on und/oder Octyl-4-isothiazolin-3-on als Konservierungsmittel enthalten, wobei die Beschichtungsmittel frei von 5-Chlor-2-methylisothiazolin-3-on (CMIT) sind. Dies bedeutet, dass CMIT in einer Menge von kleiner oder gleich 5 Gew.-%, vorzugsweise kleiner oder gleich 2 Gew.-%, besonders bevorzugt kleiner 0,1 Gew.-%, insbesondere kleiner oder gleich 0,01 Gew.-% in dem Beschichtungsmittel vorhanden ist. Es ist auch möglich, dass kein CMIT enthalten ist (also dies mit den üblichen Analysemethoden nicht nachgewiesen werden kann). Gemäß dieser Ausführungsform betrifft die Erfindung ebenso die bereits vorstehend definierten Biozidzusammensetzungen bzw. Beschichtungsmittel, welche die erfindungsgemäßen Inhibitoren enthalten und frei von 5-Chlor-2-methylisothiazolin-3-on (CMIT) sind. Dies bedeutet, dass CMIT in einer Menge von kleiner oder gleich 5 Gew.-%, vorzugsweise kleiner oder gleich 2 Gew.-%, besonders bevorzugt kleiner 0,1 Gew.-%, insbesondere kleiner oder gleich 0,01 Gew.-% in dem Beschichtungsmittel bzw. der Biozidzusammensetzung vorhanden ist. Es ist auch möglich, dass kein CMIT enthalten ist (also dies mit den üblichen Analysemethoden nicht nachgewiesen werden kann).

Die Erfindung wird durch das nachstehende Beispiel näher erläutert:

### Beispiel

Für die folgenden Versuche wurde eine Seidenmatt-Farbe der in Tabelle 1 angegebenen Zusammensetzung verwendet. Als Konservierungsmittel wurde 2-Methyl-4-isothiazolin-3-on verwendet (Kordek^{®} MLX, 9,7 % MIT, Fa. Rohm & Haas).

**Tabelle 1: Zusammensetzung der Farbe**

| **Rohstoff** | **Bezeichnung** | **Hersteller/Lieferant** | **Menge (g)** | **%** |
|---|---|---|---|---|
| Wasser | - | - | 872 | 7,50 |
| Celluloseether | Hydroxyethylcellulose | Hercules | 12 | 0,25 |
| Dispergiermittel | Tamol 1124 | Rohm & Haas | 12 | 0,30 |
| Entschäumer | LB-8041/4 | HI-MAR Specialties | 10 | 0,25 |
| Ammoniumhydroxid | | Fisher Scientific | 2 | 0,10 |
| Calciumcarbonat | HuberCarb Q325 | Huber | 312 | 7,80 |
| Titandioxid | Tiona 596 | Millenium | 624 | 15,60 |
| Propylenglyko | | Fisher Scientific | 72 | 1,80 |
| Koaleszenzmittel | Texanol | Ashland Chemical | 60 | 1,50 |
| Acrylatdispersion | Rhoplex AC 264 | Rohm & Haas | 2024 | 50,60 |
| | | **Summe** | **4000** | **100,00** |

Die Farbe wird mit der in Tabelle 2 angegebenen Menge MIT versetzt und homogenisiert. Anschließend werden die zu untersuchenden Inhibitoren eingewogen. Eine Probe nur mit MIT als alleinigem Zusatz ohne Inhibitoren dient als Positivkontrolle. Als Referenzprobe dient eine Blank-Probe ohne MIT.

Die so hergestellten flüssigen Farbproben werden in drei Serien geteilt. Die grobe Serie A wird direkt nach der Herstellung auf Glasträger appliziert und für 24 Stunden bei Raumtemperatur und 60% +/- 10% relativer Luftfeuchte getrocknet, um einen Farbfilm zu erzeugen. Probenserie B wird 14 Tage bei 40°C im Nasszustand in einem geschlossenen Gefäß gelagert. Probenserie C wird 28 Tage bei 40°C im Nasszustand in einem geschlossenen Gefäß gelagert. Aus Probenserie B und Probenserie C wird nach abgeschlossener Lagerung analog zu Probenserie A ein Farbfilm erzeugt.

Die getrockneten Farbfilme werden vom Glasträger abgeschält und in eine Schale oder Uhrglas gegeben. Anschließend werden die getrockneten Beschichtungsmaterialien in einem Exsikkator, der an eine Wasserstrahlpumpe angeschlossen ist (Fa. Brand, Saugleistung ca. 500 1/h), mit Ozon behandelt. Dazu wird die in den Exsikkator nachströmende Luft über einen Ozongenerator geleitet (Ozongenerator COM-SD-30, Kapazität 30 mg Ozon/h, Fa. Anseros). Die Ozonisierung erfolgt bei Raumtemperatur mit einer relativen Luftfeuchte von 60% +/- 10% über einen Zeitraum von 1 Minute. Dann werden die Probengefäße entnommen und das Probenmaterial olfaktorisch auf typischen Geruch untersucht.

Hierbei wurde für die olfaktorische Bewertung ein Panel aus fünf Prüfern ausgesucht, welches die Intensität des Geruchs jeder einzelnen Probe bewertete. Die Prüfer waren mit dem typischen "Ghost Odor" Geruch vertraut und aufgrund ihrer Kenntnis in der Lage, diesen eindeutig zuzuordnen.

Die Intensität des Geruchs der einzelnen Proben wird von allen Mitgliedern des Panels untersucht, die ohne zu wissen, welche Proben "Test-" und welche Proben "Kontroll-Proben " waren, und welche Punktzahl die anderen Panelmitglieder vergeben haben, an jeder Probe riechen und ihnen eine Punktzahl zuordnen. Die Bewertungsskala für die Stärke/Intensität des Geruchs, wobei 0 für gar keinen Geruch und 3 für starken Geruch steht, ist nachfolgend dargestellt:

| Punktezahl | Geruchsgrad |
|---|---|
| 0 | kein Geruch |
| 1 | unbestimmter leichter Geruch |
| 2 | leichter, aber eindeutiger Geruch |
| 3 | stark |

Aus den von den Prüfern für jede Probe ausgezeichneten Punktezahlen wird ein Mittelwert gebildet. Um sicher zu gehen, dass die Auswahl der Gruppe zufrieden stellend ist, um den Test durchzuführen, sollte der gerundete Mittelwert der Proben ohne MIT einen Wert von 0 nicht übersteigen und der gerundete Mittelwert der Probenserien B und C mit MIT und ohne Inhibitor einen Wert von 2 nicht unterschreiten. Wurden diese Kriterien nicht erfüllt, wurde eine neue Gruppe zusammengestellt. Aus den Bewertungen der fünf Prüfer wurde der Mittelwert gebildet und auf eine Ganze Zahl gerundet. Die Ergebnisse sind in Tabelle 2 dargestellt.

Aus den in der Tabelle 2 dargestellten Ergebnissen geht eindeutig die Konzentrations- und Zeitabhängigkeit des Ghost Odors hervor.

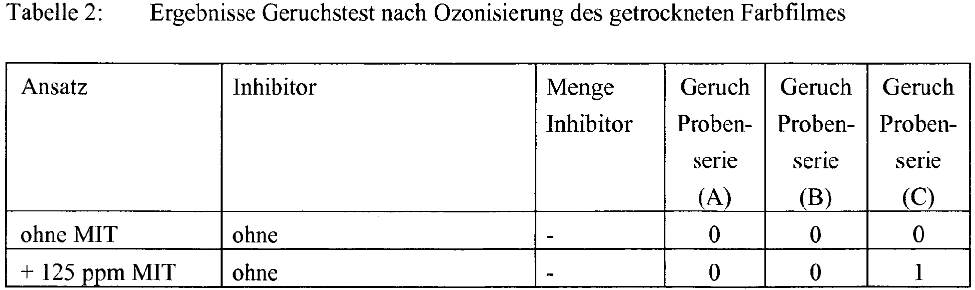

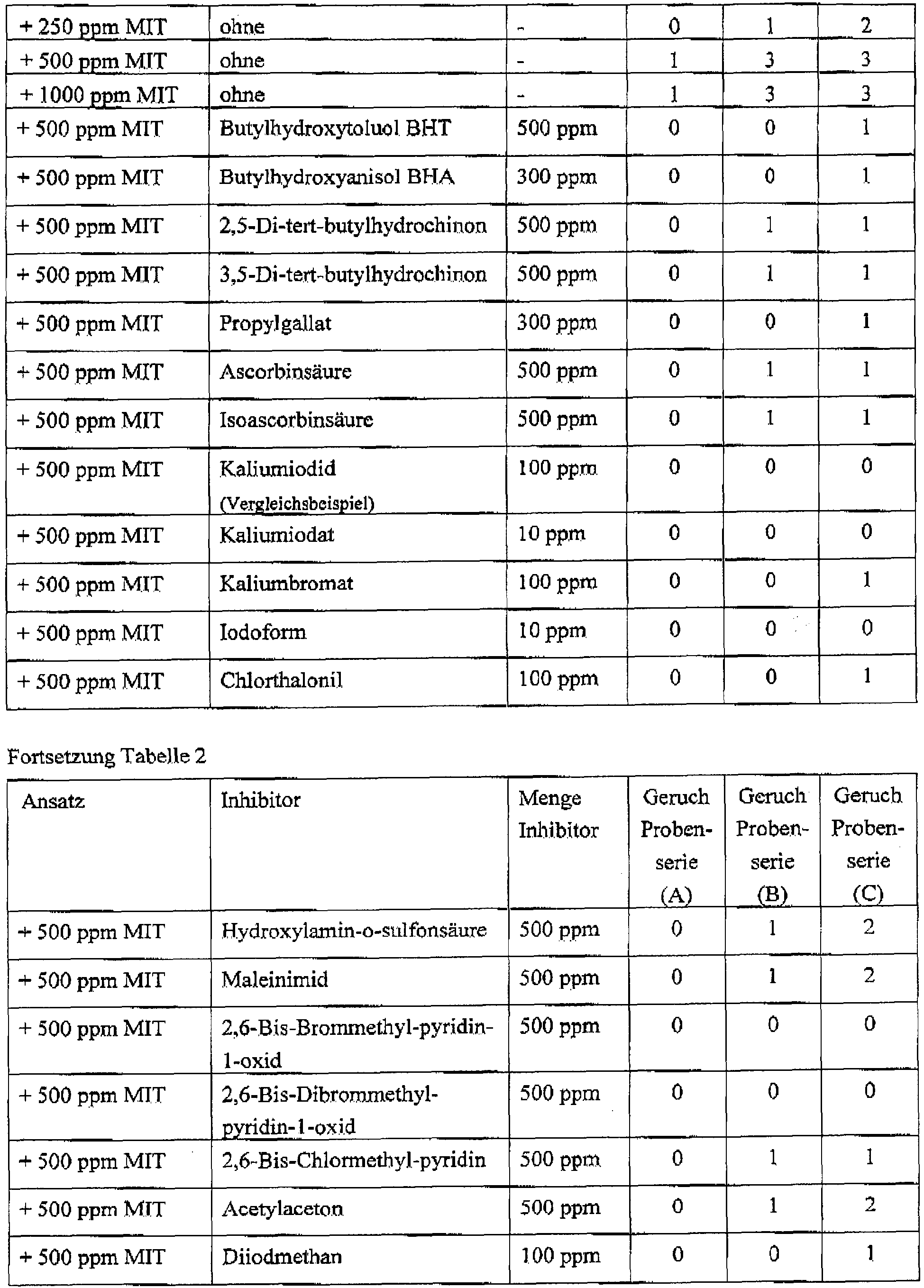

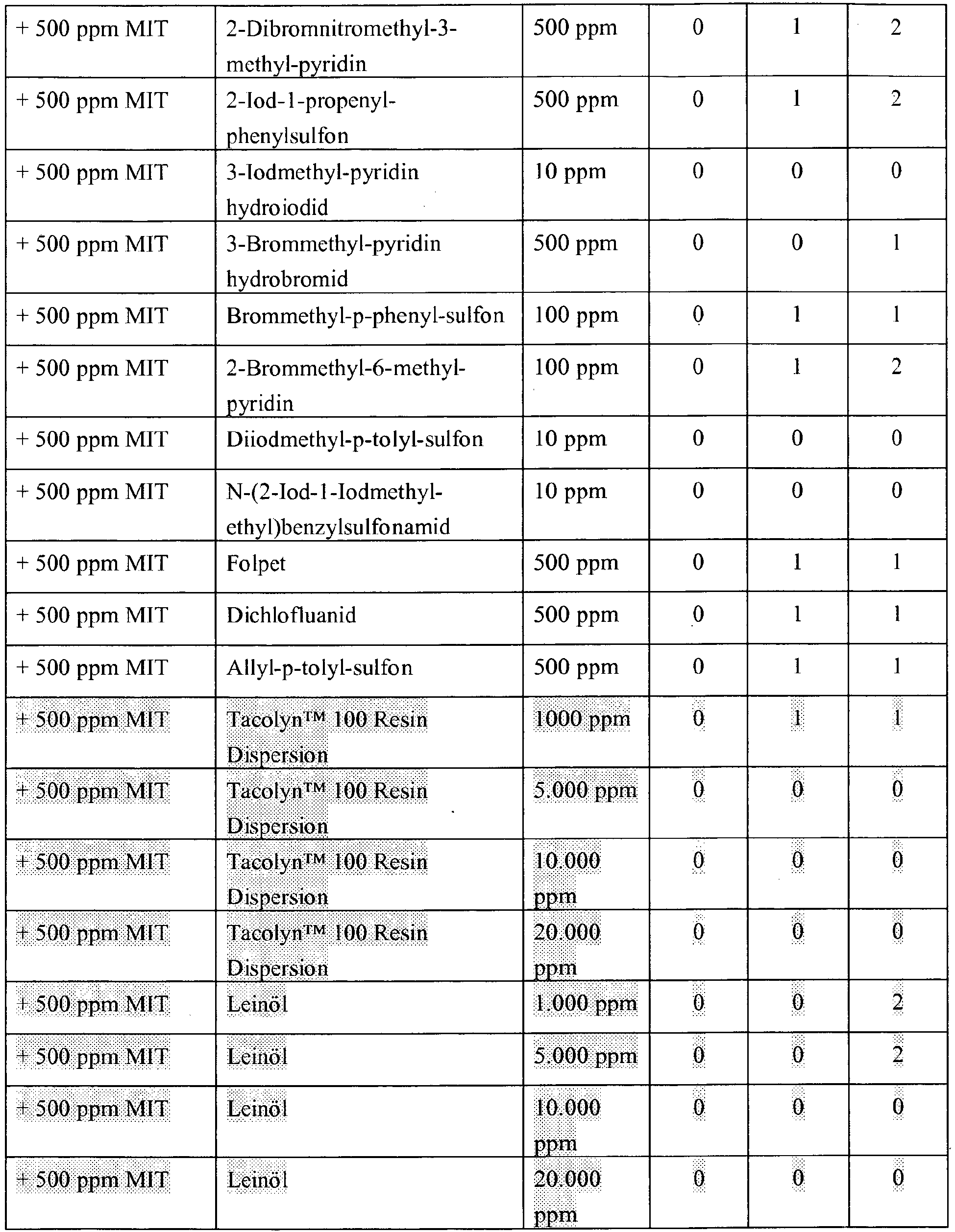

## Patentansprüche

1. Beschichtungsmittel, ausgewählt aus der Gruppe der Putze, Klebstoffe, Polymerdispersionen, Latex- und Dispersionsfarben enthaltend Methyl-4-isothiazolin-3-on und/oder Octyl-4-isothiazolin-3-on, sowie einen oder mehrere Inhibitor(en) ausgewählt aus der Gruppen bestehend aus Iodoform, Chlorothalonil, Hydroxylamin-o-sulfonsäure, Maleimid, 2,6-Bis-Brommethyl-pyridin-1-oxid, 2,6-Bis-Dibrommethyl-pyridin-1-oxid, 2,6-Bis-Chlormethyl-pyridin, Acetylaceton, Diiodmethan, 2-Dibromnitromethyl-3-methyl-pyridin, 2-Iod-1-propenyl-phenylsulfon, 3-Iodmethyl-pyridinhydroiodid, 3-Brommethyl-pyridinhydrobromid, Brommethyl-p-phenyl-sulfon, 2-Brommethyl-6-methyl-pyridin, Diiodmethyl-p-tolyl-sulfon, N-(2-Iod-1-Iodmethyl-ethyl)benzylsulfonamid, N-Trichlormethylthiophthalimid, Dichlofluanid, Allyl-p-tolyl-sulfon, Natriumiodid, Kaliumiodid, Bromessigsäure, Iodessigsäure, Alkylhalogenide, Methionin, Benzylhalogenide, Dialkylether, Diarylether, Acrylalkenylether, Sulfonsäurealkylester, Butylhydroxytoluol (BHT), natürlichen und modifizierten Harzen, Gummiharzen, Holzharzen, Kollophoniumharzen, Ölharzen, destillierten Harzen, hydrierten Harzen, dimerisierten und polymerisierten Harzen, Leinöl, Butylhydroxyanisol (BHA), 2,5-Di-tert-butylhydrochinon, 3,5-Di-tert-butylhydrochinon, Propylgallat, Ascorbinsäure, Isoascorbinsäure, Kaliumiodat, Natriumiodat und Kaliumbromat.

2. Beschichtungsmittel nach Anspruch 1, wobei der eine oder die mehreren Inhibitor(en) im Bereich von 1 bis 10.000 ppm bezogen auf dessen Endkonzentration im Beschichtungsmittel vorliegt.

3. Beschichtungsmittel nach Anspruch 1 oder 2, wobei das Verhältnis von Methyl-4-isothiazolin-3-on und/oder Octyl-4-isothiazolin-3-on zu Inhibitor im Bereich von 1.000:1 bis 1:100 liegt.

4. Beschichtungsmittel nach einem der Ansprüche 1 bis 3, enthaltend als Biozide Wirkstoffe 1,2-Benzisothiazolin-3-on (BIT) und 2-Methyl-4-isothiazolin-3-on (MIT).

5. Verwendung eines oder mehrerer Inhibitor(s)(en) ausgewählt aus der Gruppe bestehend aus Iodoform, Chlorothalonil, Hydroxylamin-o-sulfonsäure, Maleimid, 2,6-Bis-Brommethyl-pyridin-1-oxid, 2,6-Bis-Dibrommethyl-pyridin-1-oxid, 2,6-Bis-Chlormethyl-pyridin, Acetylaceton, Diiodmethan, 2-Dibromnitromethyl-3-methyl-pyridin, 2-Iod-1-propenyl-phenylsulfon, 3-Iodmethyl-pyridinhydroiodid, 3-Brommethyl-pyridinhydrobromid, Brommethyl-p-phenyl-sulfon, 2-Brommethyl-6-methyl-pyridin, Diiodmethyl-p-tolyl-sulfon, N-(2-Iod-1-Iodmethyl-ethyl)benzyl-sulfonamid, N-Trichlormethylthiophthalimid, Dichlofluanid, Allyl-p-tolyl-sulfon, Natriumiodid, Kaliumiodid, Bromessigsäure, Iodessigsäure, Alkylhalogenide, Methionin, Benzylhalogenide, Dialkylether, Diarylether, Acrylalkenylether Sulfonsäurealkylester, Butylhydroxytoluol (BHT), Butylhydroxyanisol (BHA) natürlichen und modifizierten Harzen, Gummiharzen, Holzharzen, Kollophoniumharzen, Ölharzen, destillierten Harzen, hydrierten Harzen, dimerisierten und polymerisierten Harzen, Leinöl, 2,5-Di-tert-butylhydrochinon, 3,5-Di-tert-butylhydrochinon, Propylgallat, Ascorbinsäure, Isoascorbinsäure, Kaliumiodat, Natriumiodat und Kaliumbromat, zur Verhinderung von Ghost Odor in Beschichtungsmitteln, ausgewählt aus der Gruppe der Putze, Klebstoffe, Polymerdispersionen, Latex- und Dispersionsfarben die Methyl-4-isothiazolin-3-on und/oder Octyl-4-isothiazolin-3-on enthalten.

6. Verfahren zur Herstellung eines Beschichtungsmittels gemäß einem der Ansprüche 1 bis 4, **dadurch gekennzeichnet, dass** ein oder mehrere Inhitibor(en) während der Beschichtungsmittelherstellung oder in fertige Beschichtungsmittel eingemischt werden.

## Claims

1. Coating composition, selected from the group of plasters, adhesives, polymer dispersions, latex- and dispersion-paints, comprising methyl-4-isothiazolin-3-one and/or octyl-4-isothiazolin-3-one and also one or more inhibitors selected from the group consisting of iodoform, chlorothalonil, hydroxylamine-o-sulphonic acid, maleimide, 2,6-bis-bromomethylpyridine 1-oxide, 2,6-bisdibromomethylpyridine 1-oxide, 2,6-bis-chloromethylpyridine, acetylacetone, diiodomethane, 2-dibromonitromethyl-3-methylpyridine, 2-iodo-1-propenyl phenyl sulphone, 3-iodomethyl-pyridine hydroiodide, 3-bromomethylpyridine hydrobromide, bromomethyl p-phenyl sulphone, 2-bromomethyl-6-methylpyridine, diiodomethyl p-tolyl sulphone, N-(2-iodo-1-iodomethylethyl)benzylsulphonamide, N-trichloromethylthiophthalimide, dichlofluanid, allyl p-tolyl sulphone, sodium iodide, potassium iodide, bromoacetic acid, iodoacetic acid, alkyl halides, methionine, benzyl halides, dialkyl ethers, diaryl ethers, acryloalkenyl ethers, alkyl sulphonates, butylated hydroxytoluene (BHT), natural resins and modified resins, gum resins, wood resins, colophony resins, oil resins, distilled resins, hydrogenated resins, and dimerized and polymerized resins, linseed oil, butylated hydroxyanisole (BHA), 2,5-di-tert-butylhydroquinone, 3,5-di-tert-butylhydroquinone, propyl gallate, ascorbic acid, isoascorbic acid, potassium iodate, sodium iodate and potassium bromate.

2. Coating composition according to Claim 1, the one or more inhibitors being present in the range from 1 to 10,000 ppm, relative to the final concentration thereof in the coating composition.

3. Coating composition according to Claim 1 or 2, the ratio of methyl-4-isothiazolin-3-one and/or octyl-4-isothiazolin-3-one to inhibitor being in the range from 1,000:1 to 1:100.

4. Coating composition according to Claims 1 to 3, comprising as active biocides 1,2-benzisothiazolin-3-one (BIT) and 2-methyl-4-isothiazolin-3-one (MIT).

5. Use of one or more inhibitors selected from the group consisting of iodoform, chlorothalonil, hydroxylamine-o-sulphonic acid, maleimide, 2,6-bis-bromomethylpyridine 1-oxide, 2,6-bisdibromomethylpyridine 1-oxide, 2,6-bis-chloromethylpyridine, acetylacetone, diiodomethane, 2-dibromonitromethyl-3-methylpyridine, 2-iodo-1-propenyl phenyl sulphone, 3-iodomethyl-pyridine hydroiodide, 3-bromomethylpyridine hydrobromide, bromomethyl p-phenyl sulphone, 2-bromomethyl-6-methylpyridine, diiodomethyl p-tolyl sulphone, N-(2-iodo-1-iodomethylethyl)benzylsulphonamide, N-trichloromethylthiophthalimide, dichlofluanid, allyl p-tolyl sulphone, sodium iodide, potassium iodide, bromoacetic acid, iodoacetic acid, alkyl halides, methionine, benzyl halides, dialkyl ethers, diaryl ethers, acryloalkenyl ethers, alkyl sulphonates, butylated hydroxytoluene (BHT), butylated hydroxyanisole (BHA), natural resins and modified resins, gum resins, wood resins, colophony resins, oil resins, distilled resins, hydrogenated resins, and dimerized and polymerized resins, linseed oil, 2,5-di-tert-butylhydroquinone, 3,5-di-tert-butylhydroquinone, propyl gallate, ascorbic acid, isoascorbic acid, potassium iodate, sodium iodate and potassium bromate for preventing ghost odour in coating compositions, selected from the group of plasters, adhesives, polymer dispersions, latex- and dispersion-paints, which comprise methyl-4-isothiazolin-3-one and/or octyl-4-isothiazolin-3-one.

6. Process for producing a coating composition according to claims 1 to 4, **characterized in that** one or more inhibitor(s) are added to the coating composition in time in the preparation of the coating compositions or into the completed coating composition.

## Revendications

1. Agent de revêtement, choisi dans le groupe des enduits, des adhésifs, des dispersions de polymère, des peintures à base de latex et en dispersion, contenant de la méthyl-4-isothiazolin-3-one et/ou de l'octyl-4-isothiazolin-3-one, ainsi qu'un ou plusieurs inhibiteur(s) choisis dans les groupes constitués par l'iodoforme, le chlorothalonil, l'acide hydroxylamine-o-sulfonique, le maléimide, le 2,6-bis-bromométhylpyridine-1-oxyde, le 2,6-bis-dibromométhylpyridine-1-oxyde, la 2,6-bis-chlorométhylpyridine, l'acétylacétone, le diiodométhane, la 2-dibromonitrométhyl-3-méthylpyridine, la 2-iodo-1-propénylphénylsulfone, l'iodhydrate de 3-iodométhylpyridine, le bromhydrate de 3-bromométhylpyridine, la bromométhyl-p-phénylsulfone, la 2-bromométhyl-6-méthylpyridine, la diiodométhyl-p-toluylsulfone, le N-(2-iodo-1-iodométhyléthyl)benzylsulfonamide, le N-trichlorométhylthiophtalimide, le dichlofluanide, l'allyl-p-toluylsulfone, l'iodure de sodium, l'iodure de potassium, l'acide bromoacétique, l'acide iodoacétique, les halogénures d'alkyle, la méthionine, les halogénures de benzyle, les dialkyléthers, les diaryléthers, les acrylalcényléthers, les esters alkyliques de l'acide sulfonique, le butylhydroxytoluène (BHT), les résines naturelles et modifiées, les résines de caoutchouc, les résines de bois, les résines de collophonium, les résines d'huile, les résines distillées, les résines hydrogénées, les résines dimérisées et polymérisées, l'huile de lin, le butylhydroxyanisole (BHA), la 2,5-di-tert-butylhydroquinone, la 3,5-di-tert-butylhydroquinone, le gallate de propyle, l'acide ascorbique, l'acide isoascorbique, l'iodate de potassium, l'iodate de sodium et l'iodate de potassium.

2. Agent de revêtement selon la revendication 1, ledit un ou lesdits plusieurs inhibiteur(s) se trouvant dans l'agent de revêtement dans la plage de 1 à 10 000 ppm par rapport à sa concentration finale.

3. Agent de revêtement selon la revendication 1 ou 2, le rapport de méthyl-4-isothiazolin-3-one et/ou d'octyl-4-isothiazolin-3-one à inhibiteur étant situé dans la plage de 1000:1 à 1:100.

4. Agent de revêtement selon l'une quelconque des revendications 1 à 3, contenant comme biocide les substances actives 1,2-benzisothiazolin-3-one (BIT) et 2-méthyl-4-isothiazolin-3-one (MIT).

5. Utilisation d'un ou de plusieurs inhibiteur(s) choisis dans le groupe constitué par l'iodoforme, le chlorothalonil, l'acide hydroxylamine-o-sulfonique, le maléimide, le 2,6-bis-bromométhylpyridine-1-oxyde, le 2,6-bis-dibromométhylpyridine-1-oxyde, la 2,6-bis-chlorométhylpyridine, l'acétylacétone, le diiodométhane, la 2-dibromonitrométhyl-3-méthylpyridine, la 2-iodo-1-propénylphénylsulfone, l'iodhydrate de 3-iodométhylpyridine, le bromhydrate de 3-bromométhylpyridine, la bromométhyl-p-phénylsulfone, la 2-bromométhyl-6-méthylpyridine, la diiodométhyl-p-toluylsulfone, le N-(2-iodo-1-iodométhyléthyl)benzylsulfonamide, le N-trichlorométhylthiophtalimide, le dichlofluanide, l'allyl-p-toluylsulfone, l'iodure de sodium, l'iodure de potassium, l'acide bromoacétique, l'acide iodoacétique, les halogénures d'alkyle, la méthionine, les halogénures de benzyle, les dialkyléthers, les diaryléthers, les acrylalcényléthers, les esters alkyliques de l'acide sulfonique, le butylhydroxytoluène (BHT), le butylhydroxyanisole (BHA), les résines naturelles et modifiées, les résines de caoutchouc, les résines de bois, les résines de collophonium, les résines d'huile, les résines distillées, les résines hydrogénées, les résines dimérisées et polymérisées, l'huile de lin, la 2,5-di-tert-butylhydroquinone, la 3,5-di-tert-butylhydroquinone, le gallate de propyle, l'acide ascorbique, l'acide isoascorbique, l'iodate de potassium, l'iodate de sodium et l'iodate de potassium pour empêcher l'odeur de peinture dans des agents de revêtement, choisis dans le groupe des enduits, des adhésifs, des dispersions de polymère, des peintures à base de latex et en dispersion qui contiennent de méthyl-4-isothiazolin-3-one et/ou de l'octyl-4-isothiazolin-3-one.

6. Procédé pour la préparation d'un agent de revêtement selon l'une quelconque des revendications 1 à 4, **caractérisé en ce qu'**un ou plusieurs inhibiteur(s) sont introduits en mélangeant pendant la préparation de l'agent de revêtement ou dans l'agent de revêtement fini.
